# EUROPEAN PATENT SPECIFICATION

(11) **EP 2 907 294 B1**
(45) Date of publication and mention of the grant of the patent: **03.05.2017**
(21) Application number: 13779493.9
(22) Date of filing: 07.10.2013
(51) Int. Cl.: H04M 1/60, G06F 3/044, G06F 3/041

(54) **EAR POSITION AND GESTURE DETECTION WITH MOBILE DEVICE**
OHRPOSITIONS- UND GESTENERKENNUNG MIT MOBILER VORRICHTUNG
DÉTECTION DE GESTE ET DE POSITION D'OREILLE AVEC DISPOSITIF MOBILE

(30) Priority: 09.10.2012 US 201213647669
(43) Date of publication of application: 19.08.2015
(73) Proprietor: SnapTrack, Inc., San Diego, CA 92121 (US)
(72) Inventor: BURNS, David William, San Diego, California 92121 (US); FELNHOFER, Daniel, San Diego, California 92121 (US); ELLOWAY, Donald John, San Diego, California 92121 (US)
(74) Representative: Dunlop, Hugh Christopher
(86) International application number: PCT/US2013/063730
(87) International publication number: WO 2014/058800

(56) References cited:
- WO-A1-2011/121740
- US-A1- 2010 149 126
- US-A1- 2010 246 855

## Description

### TECHNICAL FIELD

This disclosure relates to display devices, including but not limited to display devices that incorporate touch screens.

### DESCRIPTION OF THE RELATED TECHNOLOGY

Electromechanical systems (EMS) include devices having electrical and mechanical elements, actuators, transducers, sensors, optical components (e.g., mirrors) and electronics. EMS can be manufactured at a variety of scales including, but not limited to, microscales and nanoscales. For example, microelectromechanical systems (MEMS) devices can include structures having sizes ranging from about a micron to hundreds of microns or more. Nanoelectromechanical systems (NEMS) devices can include structures having sizes smaller than a micron including, for example, sizes smaller than several hundred nanometers. Electromechanical elements may be created using deposition, etching, lithography, and/or other micromachining processes that etch away parts of substrates and/or deposited material layers, or that add layers to form electrical and electromechanical devices.

One type of EMS device is called an interferometric modulator (IMOD). As used herein, the term IMOD or interferometric light modulator refers to a device that selectively absorbs and/or reflects light using the principles of optical interference. In some implementations, an IMOD may include a pair of conductive plates, one or both of which may be transparent and/or reflective, wholly or in part, and capable of relative motion upon application of an appropriate electrical signal. In an implementation, one plate may include a stationary layer deposited on a substrate and the other plate may include a reflective membrane separated from the stationary layer by an air gap. The position of one plate in relation to another can change the optical interference of light incident on the IMOD. IMOD devices have a wide range of applications, and are anticipated to be used in improving existing products and creating new products, especially those with display capabilities.

Patent application US 2010/149126 relates to a touch sensitive display with coplanar capacitive touch and proximity sensor pads and related touch panels.

In the past, users of cellular telephones (also referred to herein as cell phones) generally held the cell phone next to the ear when using the cell phone. However, it is becoming more common for cell phone users to look at video or other content on their cell phone display, with the cell phone held away from the ear, even while having a cell phone conversation. If the user switches between watching the display and holding the cell phone next to the ear, the audio level and/or sound directivity from the cell phone's speaker may require adjustment. In some situations, a user may benefit from invoking a cell phone operation other than pressing a button or performing a gesture with one or more fingers on a touch screen.

### SUMMARY

Aspects of the present invention are set out in the appended claims.

Details of one or more implementations of the subject matter described in this specification are set forth in the accompanying drawings and the description below. Although the examples provided in this summary are primarily described in terms of MEMS-based displays, the concepts provided herein may apply to other types of displays, such as liquid crystal displays (LCD), organic light-emitting diode (OLED) displays, electrophoretic displays, and field emission displays. Other features, aspects, and advantages will become apparent from the description, the drawings, and the claims. Note that the relative dimensions of the following figures may not be drawn to scale.

### BRIEF DESCRIPTION OF THE DRAWINGS

Figure 1 shows an example of an isometric view depicting two adjacent pixels in a series of pixels of an interferometric modulator (IMOD) display device.
Figure 2 shows an example of a system block diagram illustrating an electronic device incorporating a 3x3 IMOD display.
Figure 3 shows an example of a diagram illustrating movable reflective layer position versus applied voltage for the IMOD of Figure 1.
Figure 4 shows an example of a table illustrating various states of an IMOD when various common and segment voltages are applied.
Figure 5A shows an example of a diagram illustrating a frame of display data in the 3x3 IMOD display of Figure 2.
Figure 5B shows an example of a timing diagram for common and segment signals that may be used to write the frame of display data illustrated in Figure 5A.
Figure 6A shows an example of a partial cross-section of the IMOD display of Figure 1.
Figures 6B-6E show examples of cross-sections of varying implementations of IMODs.
Figure 7 shows an example of a flow diagram illustrating a manufacturing process for an IMOD.
Figures 8A-8E show examples of cross-sectional schematic illustrations of various stages in a method of making an IMOD.
Figure 9 shows an example of a flow diagram illustrating blocks of a method of invoking device operations if the presence of an ear is detected.
Figures 10A-10D show examples of various ear detection states of a projected capacitive touch sensor array and corresponding speaker settings.
Figures 10E-10G show an example of unlocking or turning on a mobile device for a phone conversation when the presence of an ear is detected
Figures 10H-10K show an example of a user of a mobile device with and without an ear-detection capability.
Figure 11 shows an example of a flow diagram illustrating blocks of an ear authentication method.
Figure 12 shows an example of a flow diagram illustrating blocks of a method for acquiring and storing ear pattern data and/or face pattern data.
Figure 13 shows an example of a flow diagram illustrating blocks of a method of invoking device operations if an ear gesture is detected.
Figures 14A-14D show examples of ear gestures.
Figure 15 shows an example of a flow diagram illustrating blocks of an ear gesture registration method.
Figures 16A and 16B show examples of system block diagrams that illustrate a display device that may be configured to perform at least some methods described herein.

Like reference numbers and designations in the various drawings indicate like elements.

### DETAILED DESCRIPTION

The following description is directed to certain implementations for the purposes of describing the innovative aspects of this disclosure. However, a person having ordinary skill in the art will readily recognize that the teachings herein can be applied in a multitude of different ways. The described implementations may be implemented in any device or system that can be configured to display an image, whether in motion (e.g., video) or stationary (e.g., still image), and whether textual, graphical or pictorial. More particularly, it is contemplated that the described implementations may be included in or associated with a variety of electronic devices such as, but not limited to: mobile telephones, multimedia Internet enabled cellular telephones, mobile television receivers, wireless devices, smartphones, Bluetooth® devices, personal data assistants (PDAs), wireless electronic mail receivers, hand-held or portable computers, netbooks, notebooks, smartbooks, tablets, printers, copiers, scanners, facsimile devices, GPS receivers/navigators, cameras, MP3 players, camcorders, game consoles, wrist watches, clocks, calculators, television monitors, flat panel displays, electronic reading devices (i.e., e-readers), computer monitors, auto displays (including odometer and speedometer displays, etc.), cockpit controls and/or displays, camera view displays (such as the display of a rear view camera in a vehicle), electronic photographs, electronic billboards or signs, projectors, architectural structures, microwaves, refrigerators, stereo systems, cassette recorders or players, DVD players, CD players, VCRs, radios, portable memory chips, washers, dryers, washer/dryers, parking meters, packaging (such as in electromechanical systems (EMS), microelectromechanical systems (MEMS) and non-MEMS applications), aesthetic structures (e.g., display of images on a piece of jewelry) and a variety of EMS devices. The teachings herein also can be used in non-display applications such as, but not limited to, electronic switching devices, radio frequency filters, sensors, accelerometers, gyroscopes, motion-sensing devices, magnetometers, inertial components for consumer electronics, parts of consumer electronics products, varactors, liquid crystal devices, electrophoretic devices, drive schemes, manufacturing processes and electronic test equipment. Thus, the teachings are not intended to be limited to the implementations depicted solely in the Figures, but instead have wide applicability as will be readily apparent to one having ordinary skill in the art.

According to some implementations provided herein, a mobile device, such as a cell phone, may include one or more sensors. In some implementations, the mobile device may include a sensor array. The sensor array may include a touch sensor array, such as a projected capacitive touch (PCT) sensor array. The mobile device may be configured to determine whether one or more sensor signals from the sensor array indicate an ear gesture and/or the presence of an ear. One or more device operations may be invoked according to the determination.

The device operation may involve controlling at least one speaker of a cell phone. The device operation may involve switching to a speaker phone mode, switching to a normal audio mode, adjusting a volume of an audio output device, adjusting a directionality of an audio output device, adjusting a directionality of a microphone, etc. For example, if the presence of an ear is detected, the volume of a cell phone speaker may be reduced. The device operation may involve tracking an ear position and/or orientation. Microphone, speaker and/or other device functionality may be adjusted according to the ear position and/or orientation.

Alternatively, or additionally, the device operation may involve recognizing an ear, recognizing a characteristic pattern of an ear and a portion of a face, detecting a left ear, detecting a right ear, recognizing a particular ear, etc. In some such implementations, ear recognition may be used as a type of user authentication. For example, an ear recognition process may be used in lieu of (or in addition to) an authorization code, such as a personal identification number (PIN). In some implementations, the ear recognition process may invoke device operations for accessing a mobile device, unlocking a mobile device, etc.

The device operation may involve learning processes. For example, the device operation may involve learning a characteristic pattern of an ear and/or a portion of a face, storing ear pattern data and/or face pattern data, etc. Some implementations may involve associating an ear gesture with a device operation. Learning processes may include receiving and storing user input regarding device functionality. For example, some such processes may involve receiving user input regarding a first desired speaker volume level to be applied when a cell phone is next to the user's ear and/or regarding a second desired speaker volume level to be applied when the cell phone is not next to the user's ear.

In some implementations, a device may control voice recognition functionality according to whether an ear and/or an ear gesture is detected. For example, a voice-recognition feature may be turned on or turned off if an ear is detected.

Particular implementations of the subject matter described in this disclosure can be implemented to realize one or more of the following potential advantages. If a user switches between watching a cell phone display and holding the cell phone next to the ear, the audio level and/or sound directivity from the cell phone's speaker may be automatically adjusted upon detecting the presence or absence of an ear. Such functionality eliminates the need for a user to manually change the audio settings. Providing various types of cell phone functionality according to detected ear gestures may allow a user to unlock a cell phone, receive a phone call, initiate a phone call, terminate a phone call, etc., without requiring the use of two hands or one or more fingers touching the surface of a touch screen.

Implementations that enable ear and/or face recognition to be used as a type of user authentication can provide varying levels of device security. In some implementations, an ear recognition process alone may invoke device operations for accessing a mobile device, unlocking a mobile device, etc. Using an ear recognition process in addition to an authorization code can provide a higher level of security. In some implementations, a user of a cell phone with ear or ear gesture recognition capability may allow the user to interact with the phone without excessive glancing at the phone or the need to touch the face of the display with a finger, which can add to convenience and safety while in a mobile vehicle, for example.

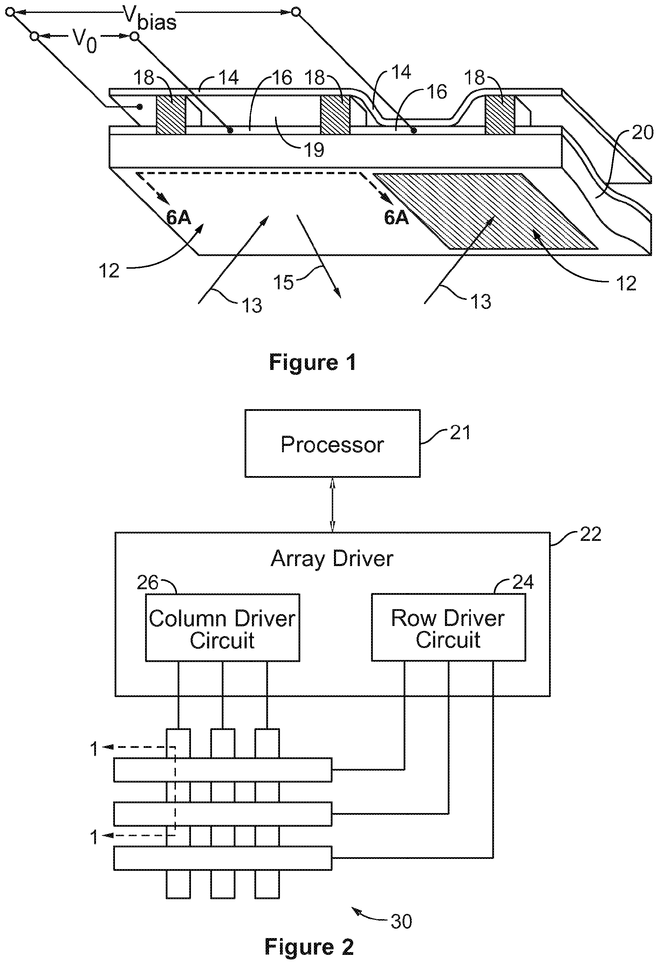

Figure 1 shows an example of an isometric view depicting two adjacent pixels in a series of pixels of an IMOD display device. The IMOD display device includes one or more interferometric MEMS display elements. In these devices, the pixels of the MEMS display elements can be in either a bright or dark state. In the bright ("relaxed," "open" or "on") state, the display element reflects a large portion of incident visible light, e.g., to a user. Conversely, in the dark ("actuated," "closed" or "off") state, the display element reflects little incident visible light. In some implementations, the light reflectance properties of the on and off states may be reversed. MEMS pixels can be configured to reflect predominantly at particular wavelengths allowing for a color display in addition to black and white.

The IMOD display device can include a row/column array of IMODs. Each IMOD can include a pair of reflective layers, i.e., a movable reflective layer and a fixed partially reflective layer, positioned at a variable and controllable distance from each other to form an air gap (also referred to as an optical gap or cavity). The movable reflective layer may be moved between at least two positions. In a first position, i.e., a relaxed position, the movable reflective layer can be positioned at a relatively large distance from the fixed partially reflective layer. In a second position, i.e., an actuated position, the movable reflective layer can be positioned more closely to the partially reflective layer. Incident light that reflects from the two layers can interfere constructively or destructively depending on the position of the movable reflective layer, producing either an overall reflective or non-reflective state for each pixel. In some implementations, the IMOD may be in a reflective state when unactuated, reflecting light within the visible spectrum, and may be in a dark state when unactuated, reflecting light outside of the visible range (e.g., infrared light). In some other implementations, however, an IMOD may be in a dark state when unactuated, and in a reflective state when actuated. In some implementations, the introduction of an applied voltage can drive the pixels to change states. In some other implementations, an applied charge can drive the pixels to change states.

The depicted portion of the pixel array in Figure 1 includes two adjacent IMODs 12. In the IMOD 12 on the left (as illustrated), a movable reflective layer 14 is illustrated in a relaxed position at a predetermined distance from an optical stack 16, which includes a partially reflective layer. The voltage V₀ applied across the IMOD 12 on the left is insufficient to cause actuation of the movable reflective layer 14. In the IMOD 12 on the right, the movable reflective layer 14 is illustrated in an actuated position near or adjacent the optical stack 16. The voltage V_{bias} applied across the IMOD 12 on the right is sufficient to maintain the movable reflective layer 14 in the actuated position.

In Figure 1, the reflective properties of pixels 12 are generally illustrated with arrows 13 indicating light incident upon the pixels 12, and light 15 reflecting from the IMOD 12 on the left. Although not illustrated in detail, it will be understood by one having ordinary skill in the art that most of the light 13 incident upon the pixels 12 will be transmitted through the transparent substrate 20, toward the optical stack 16. A portion of the light incident upon the optical stack 16 will be transmitted through the partially reflective layer of the optical stack 16, and a portion will be reflected back through the transparent substrate 20. The portion of light 13 that is transmitted through the optical stack 16 will be reflected at the movable reflective layer 14, back toward (and through) the transparent substrate 20. Interference (constructive or destructive) between the light reflected from the partially reflective layer of the optical stack 16 and the light reflected from the movable reflective layer 14 will determine the wavelength(s) of light 15 reflected from the IMOD 12.

The optical stack 16 can include a single layer or several layers. The layer(s) can include one or more of an electrode layer, a partially reflective and partially transmissive layer and a transparent dielectric layer. In some implementations, the optical stack 16 is electrically conductive, partially transparent and partially reflective, and may be fabricated, for example, by depositing one or more of the above layers onto a transparent substrate 20. The electrode layer can be formed from a variety of materials, such as various metals, for example indium tin oxide (ITO). The partially reflective layer can be formed from a variety of materials that are partially reflective, such as various metals, e.g., chromium (Cr), semiconductors, and dielectrics. The partially reflective layer can be formed of one or more layers of materials, and each of the layers can be formed of a single material or a combination of materials. In some implementations, the optical stack 16 can include a single semi-transparent thickness of metal or semiconductor which serves as both an optical absorber and conductor, while different, more conductive layers or portions (e.g., of the optical stack 16 or of other structures of the IMOD) can serve to bus signals between IMOD pixels. The optical stack 16 also can include one or more insulating or dielectric layers covering one or more conductive layers or a conductive/absorptive layer.

In some implementations, the layer(s) of the optical stack 16 can be patterned into parallel strips, and may form row electrodes in a display device as described further below. As will be understood by one having skill in the art, the term "patterned" is used herein to refer to masking as well as etching processes. In some implementations, a highly conductive and reflective material, such as aluminum (Al), may be used for the movable reflective layer 14, and these strips may form column electrodes in a display device. The movable reflective layer 14 may be formed as a series of parallel strips of a deposited metal layer or layers (orthogonal to the row electrodes of the optical stack 16) to form columns deposited on top of posts 18 and an intervening sacrificial material deposited between the posts 18. When the sacrificial material is etched away, a defined gap 19, or optical cavity, can be formed between the movable reflective layer 14 and the optical stack 16. In some implementations, the spacing between posts 18 may be approximately 1-1000 um, while the gap 19 may be less than 10,000 Angstroms (Å).

In some implementations, each pixel of the IMOD, whether in the actuated or relaxed state, is essentially a capacitor formed by the fixed and moving reflective layers. When no voltage is applied, the movable reflective layer 14 remains in a mechanically relaxed state, as illustrated by the IMOD 12 on the left in Figure 1, with the gap 19 between the movable reflective layer 14 and optical stack 16. However, when a potential difference, e.g., voltage, is applied to at least one of a selected row and column, the capacitor formed at the intersection of the row and column electrodes at the corresponding pixel becomes charged, and electrostatic forces pull the electrodes together. If the applied voltage exceeds a threshold, the movable reflective layer 14 can deform and move near or against the optical stack 16. A dielectric layer (not shown) within the optical stack 16 may prevent shorting and control the separation distance between the layers 14 and 16, as illustrated by the actuated IMOD 12 on the right in Figure 1. The behavior is the same regardless of the polarity of the applied potential difference. Though a series of pixels in an array may be referred to in some instances as "rows" or "columns," a person having ordinary skill in the art will readily understand that referring to one direction as a "row" and another as a "column" is arbitrary. Restated, in some orientations, the rows can be considered columns, and the columns considered to be rows. Furthermore, the display elements may be evenly arranged in orthogonal rows and columns (an "array"), or arranged in non-linear configurations, for example, having certain positional offsets with respect to one another (a "mosaic"). The terms "array" and "mosaic" may refer to either configuration. Thus, although the display is referred to as including an "array" or "mosaic," the elements themselves need not be arranged orthogonally to one another, or disposed in an even distribution, in any instance, but may include arrangements having asymmetric shapes and unevenly distributed elements.

Figure 2 shows an example of a system block diagram illustrating an electronic device incorporating a 3x3 IMOD display. The electronic device includes a processor 21 that may be configured to execute one or more software modules. In addition to executing an operating system, the processor 21 may be configured to execute one or more software applications, including a web browser, a telephone application, an email program, or other software application.

The processor 21 can be configured to communicate with an array driver 22. The array driver 22 can include a row driver circuit 24 and a column driver circuit 26 that provide signals to, e.g., a display array or panel 30. The cross section of the IMOD display device illustrated in Figure 1 is shown by the lines 1-1 in Figure 2. Although Figure 2 illustrates a 3x3 array of IMODs for the sake of clarity, the display array 30 may contain a very large number of IMODs, and may have a different number of IMODs in rows than in columns, and vice versa.

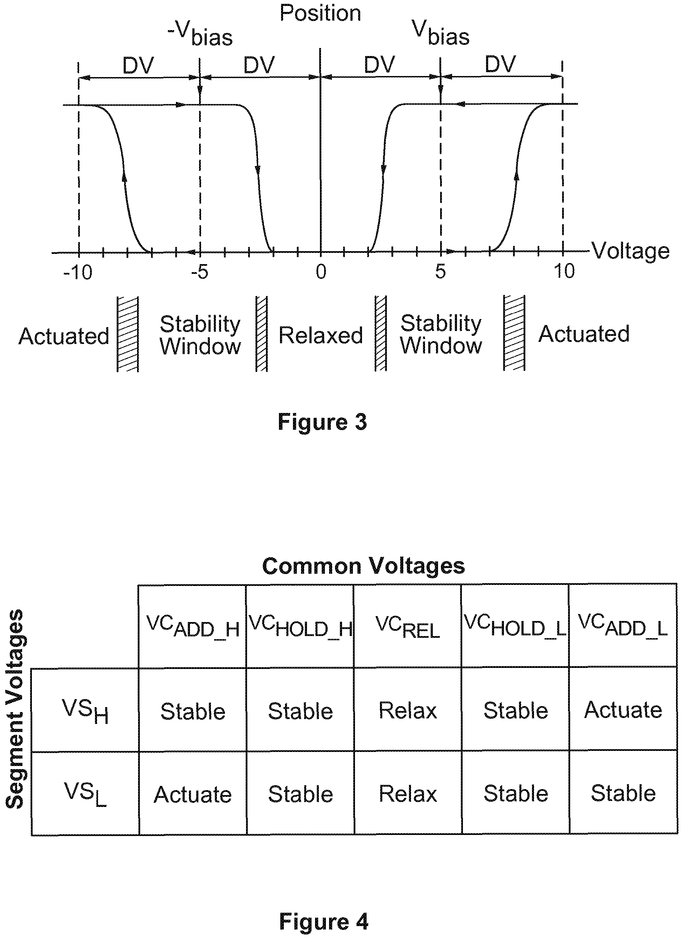

Figure 3 shows an example of a diagram illustrating movable reflective layer position versus applied voltage for the IMOD of Figure 1. For MEMS IMODs, the row/column (i.e., common/segment) write procedure may take advantage of a hysteresis property of these devices as illustrated in Figure 3. An IMOD may require, for example, about a 10-volt potential difference to cause the movable reflective layer, or mirror, to change from the relaxed state to the actuated state. When the voltage is reduced from that value, the movable reflective layer maintains its state as the voltage drops back below, e.g., 10 volts. However, the movable reflective layer does not relax completely until the voltage drops below 2 volts. Thus, a range of voltage, approximately 3 to 7 volts, as shown in Figure 3, exists where there is a window of applied voltage within which the device is stable in either the relaxed or actuated state. This is referred to herein as the "hysteresis window" or "stability window." For a display array 30 having the hysteresis characteristics of Figure 3, the row/column write procedure can be designed to address one or more rows at a time, such that during the addressing of a given row, pixels in the addressed row that are to be actuated are exposed to a voltage difference of about 10 volts, and pixels that are to be relaxed are exposed to a voltage difference of near zero volts. After addressing, the pixels are exposed to a steady state or bias voltage difference of approximately 5-volts such that they remain in the previous strobing state. In this example, after being addressed, each pixel sees a potential difference within the "stability window" of about 3-7 volts. This hysteresis property feature enables the pixel design, e.g., illustrated in Figure 1, to remain stable in either an actuated or relaxed pre-existing state under the same applied voltage conditions. Since each IMOD pixel, whether in the actuated or relaxed state, is essentially a capacitor formed by the fixed and moving reflective layers, this stable state can be held at a steady voltage within the hysteresis window without substantially consuming or losing power. Moreover, essentially little or no current flows into the IMOD pixel if the applied voltage potential remains substantially fixed.

In some implementations, a frame of an image may be created by applying data signals in the form of "segment" voltages along the set of column electrodes, in accordance with the desired change (if any) to the state of the pixels in a given row. Each row of the array can be addressed in turn, such that the frame is written one row at a time. To write the desired data to the pixels in a first row, segment voltages corresponding to the desired state of the pixels in the first row can be applied on the column electrodes, and a first row pulse in the form of a specific "common" voltage or signal can be applied to the first row electrode. The set of segment voltages can then be changed to correspond to the desired change (if any) to the state of the pixels in the second row, and a second common voltage can be applied to the second row electrode. In some implementations, the pixels in the first row are unaffected by the change in the segment voltages applied along the column electrodes, and remain in the state they were set to during the first common voltage row pulse. This process may be repeated for the entire series of rows, or alternatively, columns, in a sequential fashion to produce the image frame. The frames can be refreshed and/or updated with new image data by continually repeating this process at some desired number of frames per second.

The combination of segment and common signals applied across each pixel (that is, the potential difference across each pixel) determines the resulting state of each pixel. Figure 4 shows an example of a table illustrating various states of an IMOD when various common and segment voltages are applied. As will be readily understood by one having ordinary skill in the art, the "segment" voltages can be applied to either the column electrodes or the row electrodes, and the "common" voltages can be applied to the other of the column electrodes or the row electrodes.

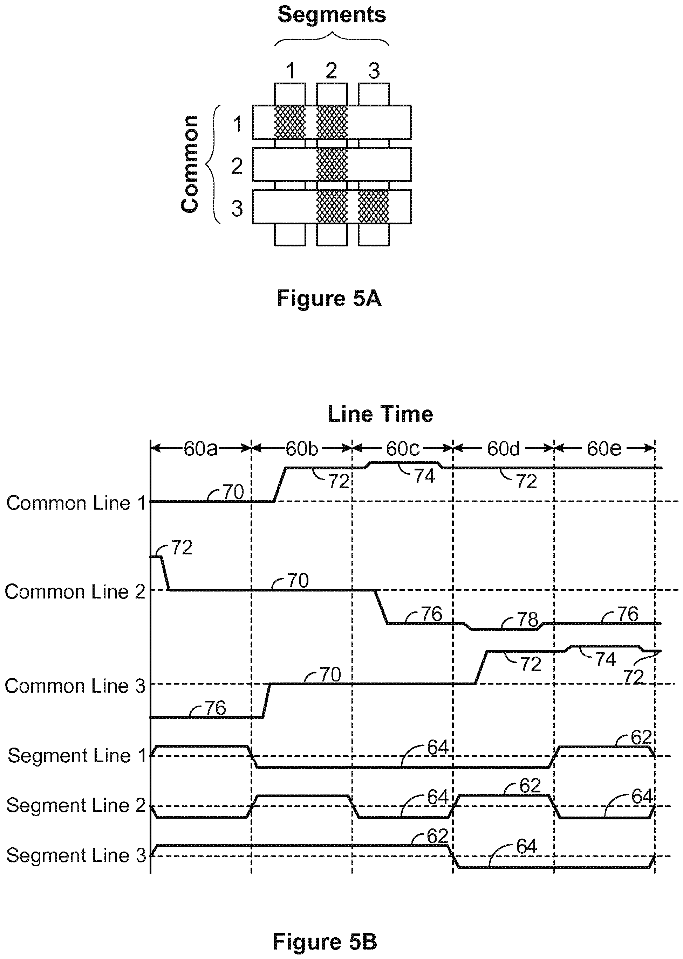

As illustrated in Figure 4 (as well as in the timing diagram shown in Figure 5B), when a release voltage VC_{REL} is applied along a common line, all IMOD elements along the common line will be placed in a relaxed state, alternatively referred to as a released or unactuated state, regardless of the voltage applied along the segment lines, i.e., high segment voltage VS_{H} and low segment voltage VS_{L}. In particular, when the release voltage VC_{REL} is applied along a common line, the potential voltage across the modulator (alternatively referred to as a pixel voltage) is within the relaxation window (see Figure 3, also referred to as a release window) both when the high segment voltage VS_{H} and the low segment voltage VS_{L} are applied along the corresponding segment line for that pixel.

When a hold voltage is applied on a common line, such as a high hold voltage VC_{HOLD_H} or a low hold voltage VC_{HOLD_L}, the state of the IMOD will remain constant. For example, a relaxed IMOD will remain in a relaxed position, and an actuated IMOD will remain in an actuated position. The hold voltages can be selected such that the pixel voltage will remain within a stability window both when the high segment voltage VS_{H} and the low segment voltage VS_{L} are applied along the corresponding segment line. Thus, the segment voltage swing, i.e., the difference between the high VS_{H} and low segment voltage VS_{L}, is less than the width of either the positive or the negative stability window.

When an addressing, or actuation, voltage is applied on a common line, such as a high addressing voltage VC_{ADD_H} or a low addressing voltage VC_{ADD_L}, data can be selectively written to the modulators along that line by application of segment voltages along the respective segment lines. The segment voltages may be selected such that actuation is dependent upon the segment voltage applied. When an addressing voltage is applied along a common line, application of one segment voltage will result in a pixel voltage within a stability window, causing the pixel to remain unactuated. In contrast, application of the other segment voltage will result in a pixel voltage beyond the stability window, resulting in actuation of the pixel. The particular segment voltage which causes actuation can vary depending upon which addressing voltage is used. In some implementations, when the high addressing voltage VC_{ADD_H} is applied along the common line, application of the high segment voltage VS_{H} can cause a modulator to remain in its current position, while application of the low segment voltage VS_{L} can cause actuation of the modulator. As a corollary, the effect of the segment voltages can be the opposite when a low addressing voltage VC_{ADD_L} is applied, with high segment voltage VS_{H} causing actuation of the modulator, and low segment voltage VS_{L} having no effect (i.e., remaining stable) on the state of the modulator.

In some implementations, hold voltages, address voltages, and segment voltages may be used which always produce the same polarity potential difference across the modulators. In some other implementations, signals can be used which alternate the polarity of the potential difference of the modulators. Alternation of the polarity across the modulators (that is, alternation of the polarity of write procedures) may reduce or inhibit charge accumulation which could occur after repeated write operations of a single polarity.

Figure 5A shows an example of a diagram illustrating a frame of display data in the 3x3 IMOD display of Figure 2. Figure 5B shows an example of a timing diagram for common and segment signals that may be used to write the frame of display data illustrated in Figure 5A. The signals can be applied to the, e.g., 3x3 array of Figure 2, which will ultimately result in the line time 60e display arrangement illustrated in Figure 5A. The actuated modulators in Figure 5A are in a dark-state, i.e., where a substantial portion of the reflected light is outside of the visible spectrum so as to result in a dark appearance to, e.g., a viewer. Prior to writing the frame illustrated in Figure 5A, the pixels can be in any state, but the write procedure illustrated in the timing diagram of Figure 5B presumes that each modulator has been released and resides in an unactuated state before the first line time 60a.

During the first line time 60a, a release voltage 70 is applied on common line 1; the voltage applied on common line 2 begins at a high hold voltage 72 and moves to a release voltage 70; and a low hold voltage 76 is applied along common line 3. Thus, the modulators (common 1, segment 1), (1,2) and (1,3) along common line 1 remain in a relaxed, or unactuated, state for the duration of the first line time 60a, the modulators (2,1), (2,2) and (2,3) along common line 2 will move to a relaxed state, and the modulators (3,1), (3,2) and (3,3) along common line 3 will remain in their previous state. With reference to Figure 4, the segment voltages applied along segment lines 1, 2 and 3 will have no effect on the state of the IMODs, as none of common lines 1, 2 or 3 are being exposed to voltage levels causing actuation during line time 60a (i.e., VC_{REL} - relax and VC_{HOLD_L} - stable).

During the second line time 60b, the voltage on common line 1 moves to a high hold voltage 72, and all modulators along common line 1 remain in a relaxed state regardless of the segment voltage applied because no addressing, or actuation, voltage was applied on the common line 1. The modulators along common line 2 remain in a relaxed state due to the application of the release voltage 70, and the modulators (3,1), (3,2) and (3,3) along common line 3 will relax when the voltage along common line 3 moves to a release voltage 70.

During the third line time 60c, common line 1 is addressed by applying a high address voltage 74 on common line 1. Because a low segment voltage 64 is applied along segment lines 1 and 2 during the application of this address voltage, the pixel voltage across modulators (1,1) and (1,2) is greater than the high end of the positive stability window (i.e., the voltage differential exceeded a predefined threshold) of the modulators, and the modulators (1,1) and (1,2) are actuated. Conversely, because a high segment voltage 62 is applied along segment line 3, the pixel voltage across modulator (1,3) is less than that of modulators (1,1) and (1,2), and remains within the positive stability window of the modulator; modulator (1,3) thus remains relaxed. Also during line time 60c, the voltage along common line 2 decreases to a low hold voltage 76, and the voltage along common line 3 remains at a release voltage 70, leaving the modulators along common lines 2 and 3 in a relaxed position.

During the fourth line time 60d, the voltage on common line 1 returns to a high hold voltage 72, leaving the modulators along common line 1 in their respective addressed states. The voltage on common line 2 is decreased to a low address voltage 78. Because a high segment voltage 62 is applied along segment line 2, the pixel voltage across modulator (2,2) is below the lower end of the negative stability window of the modulator, causing the modulator (2,2) to actuate. Conversely, because a low segment voltage 64 is applied along segment lines 1 and 3, the modulators (2,1) and (2,3) remain in a relaxed position. The voltage on common line 3 increases to a high hold voltage 72, leaving the modulators along common line 3 in a relaxed state.

Finally, during the fifth line time 60e, the voltage on common line 1 remains at high hold voltage 72, and the voltage on common line 2 remains at a low hold voltage 76, leaving the modulators along common lines 1 and 2 in their respective addressed states. The voltage on common line 3 increases to a high address voltage 74 to address the modulators along common line 3. As a low segment voltage 64 is applied on segment lines 2 and 3, the modulators (3,2) and (3,3) actuate, while the high segment voltage 62 applied along segment line 1 causes modulator (3,1) to remain in a relaxed position. Thus, at the end of the fifth line time 60e, the 3x3 pixel array is in the state shown in Figure 5A, and will remain in that state as long as the hold voltages are applied along the common lines, regardless of variations in the segment voltage which may occur when modulators along other common lines (not shown) are being addressed.

In the timing diagram of Figure 5B, a given write procedure (i.e., line times 60a-60e) can include the use of either high hold and address voltages, or low hold and address voltages. Once the write procedure has been completed for a given common line (and the common voltage is set to the hold voltage having the same polarity as the actuation voltage), the pixel voltage remains within a given stability window, and does not pass through the relaxation window until a release voltage is applied on that common line. Furthermore, as each modulator is released as part of the write procedure prior to addressing the modulator, the actuation time of a modulator, rather than the release time, may determine the necessary line time. Specifically, in implementations in which the release time of a modulator is greater than the actuation time, the release voltage may be applied for longer than a single line time, as depicted in Figure 5B. In some other implementations, voltages applied along common lines or segment lines may vary to account for variations in the actuation and release voltages of different modulators, such as modulators of different colors.

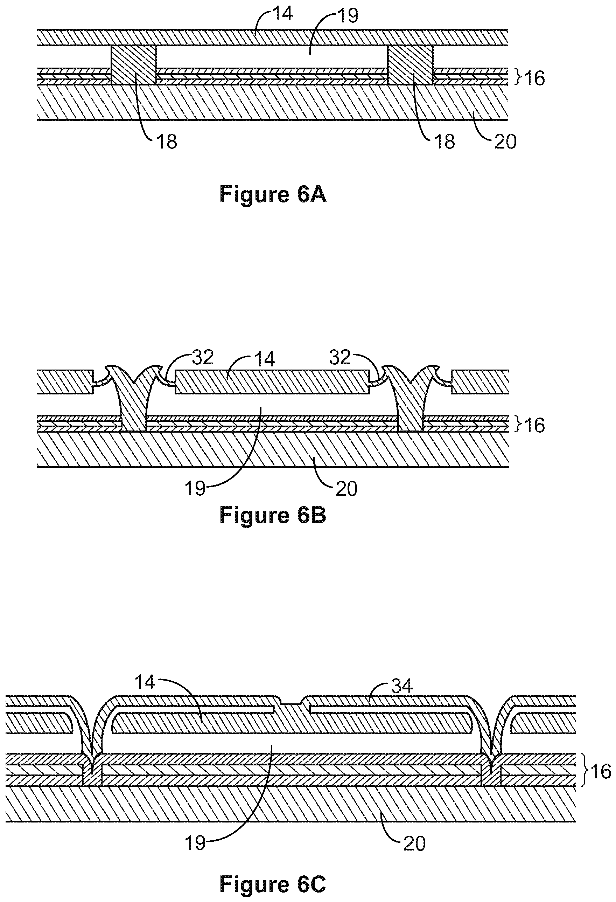

The details of the structure of IMODs that operate in accordance with the principles set forth above may vary widely. For example, Figures 6A-6E show examples of cross-sections of varying implementations of IMODs, including the movable reflective layer 14 and its supporting structures. Figure 6A shows an example of a partial cross-section of the IMOD display of Figure 1, where a strip of metal material, i.e., the movable reflective layer 14 is deposited on supports 18 extending orthogonally from the substrate 20. In Figure 6B, the movable reflective layer 14 of each IMOD is generally square or rectangular in shape and attached to supports at or near the corners, on tethers 32. In Figure 6C, the movable reflective layer 14 is generally square or rectangular in shape and suspended from a deformable layer 34, which may include a flexible metal. The deformable layer 34 can connect, directly or indirectly, to the substrate 20 around the perimeter of the movable reflective layer 14. These connections are herein referred to as support posts. The implementation shown in Figure 6C has additional benefits deriving from the decoupling of the optical functions of the movable reflective layer 14 from its mechanical functions, which are carried out by the deformable layer 34. This decoupling allows the structural design and materials used for the reflective layer 14 and those used for the deformable layer 34 to be optimized independently of one another.

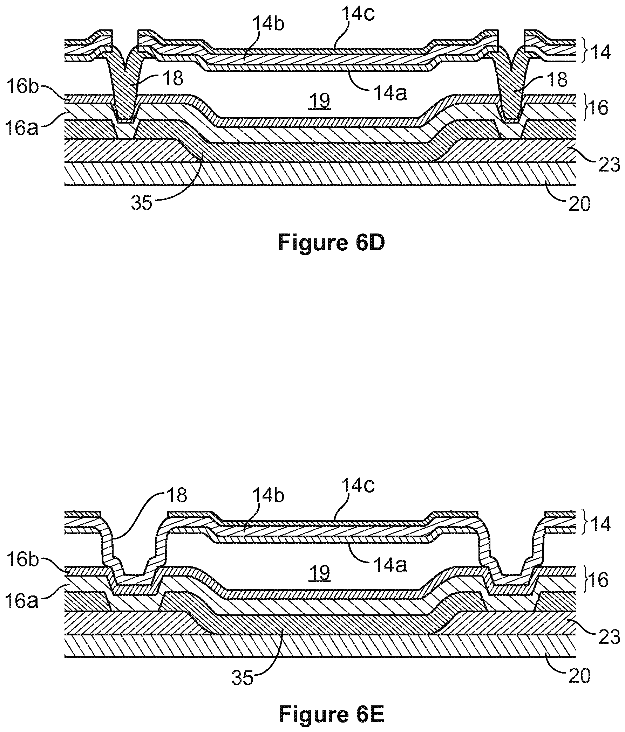

Figure 6D shows another example of an IMOD, where the movable reflective layer 14 includes a reflective sub-layer 14a. The movable reflective layer 14 rests on a support structure, such as support posts 18. The support posts 18 provide separation of the movable reflective layer 14 from the lower stationary electrode (i.e., part of the optical stack 16 in the illustrated IMOD) so that a gap 19 is formed between the movable reflective layer 14 and the optical stack 16, for example when the movable reflective layer 14 is in a relaxed position. The movable reflective layer 14 also can include a conductive layer 14c, which may be configured to serve as an electrode, and a support layer 14b. In this example, the conductive layer 14c is disposed on one side of the support layer 14b, distal from the substrate 20, and the reflective sub-layer 14a is disposed on the other side of the support layer 14b, proximal to the substrate 20. In some implementations, the reflective sub-layer 14a can be conductive and can be disposed between the support layer 14b and the optical stack 16. The support layer 14b can include one or more layers of a dielectric material, for example, silicon oxynitride (SiON) or silicon dioxide (SiO₂). In some implementations, the support layer 14b can be a stack of layers, such as, for example, an SiO₂/SiON/SiO₂ tri-layer stack. Either or both of the reflective sub-layer 14a and the conductive layer 14c can include, e.g., an aluminum (Al) alloy with about 0.5% copper (Cu), or another reflective metallic material. Employing conductive layers 14a, 14c above and below the dielectric support layer 14b can balance stresses and provide enhanced conduction. In some implementations, the reflective sub-layer 14a and the conductive layer 14c can be formed of different materials for a variety of design purposes, such as achieving specific stress profiles within the movable reflective layer 14.

As illustrated in Figure 6D, some implementations also can include a black mask structure 23. The black mask structure 23 can be formed in optically inactive regions (e.g., between pixels or under posts 18) to absorb ambient or stray light. The black mask structure 23 also can improve the optical properties of a display device by inhibiting light from being reflected from or transmitted through inactive portions of the display, thereby increasing the contrast ratio. Additionally, the black mask structure 23 can be conductive and be configured to function as an electrical bussing layer. In some implementations, the row electrodes can be connected to the black mask structure 23 to reduce the resistance of the connected row electrode. The black mask structure 23 can be formed using a variety of methods, including deposition and patterning techniques. The black mask structure 23 can include one or more layers. For example, in some implementations, the black mask structure 23 includes a molybdenum-chromium (MoCr) layer that serves as an optical absorber, an SiO₂ layer, and an aluminum alloy that serves as a reflector and a bussing layer, with a thickness in the range of about 30-80 Å, 500-1000 Å, and 500-6000 Å, respectively. The one or more layers can be patterned using a variety of techniques, including photolithography and dry etching, including, for example, carbon tetrafluoromethane (CF₄) and/or oxygen (O₂) for the MoCr and SiO₂ layers and chlorine (Cl₂) and/or boron trichloride (BCl₃) for the aluminum alloy layer. In some implementations, the black mask 23 can be an etalon or interferometric stack structure. In such interferometric stack black mask structures 23, the conductive absorbers can be used to transmit or bus signals between lower, stationary electrodes in the optical stack 16 of each row or column. In some implementations, a spacer layer 35 can serve to generally electrically isolate the absorber layer 16a from the conductive layers in the black mask 23.

Figure 6E shows another example of an IMOD, where the movable reflective layer 14 is self-supporting. In contrast with Figure 6D, the implementation of Figure 6E does not include support posts 18. Instead, the movable reflective layer 14 contacts the underlying optical stack 16 at multiple locations, and the curvature of the movable reflective layer 14 provides sufficient support that the movable reflective layer 14 returns to the unactuated position of Figure 6E when the voltage across the IMOD is insufficient to cause actuation. The optical stack 16, which may contain a plurality of several different layers, is shown here for clarity including an optical absorber 16a, and a dielectric 16b. In some implementations, the optical absorber 16a may serve both as a fixed electrode and as a partially reflective layer.

In implementations such as those shown in Figures 6A-6E, the IMODs function as direct-view devices, in which images are viewed from the front side of the transparent substrate 20, i.e., the side opposite to that upon which the modulator is arranged. In these implementations, the back portions of the device (that is, any portion of the display device behind the movable reflective layer 14, including, for example, the deformable layer 34 illustrated in Figure 6C) can be configured and operated upon without impacting or negatively affecting the image quality of the display device, because the reflective layer 14 optically shields those portions of the device. For example, in some implementations a bus structure (not illustrated) can be included behind the movable reflective layer 14 which provides the ability to separate the optical properties of the modulator from the electromechanical properties of the modulator, such as voltage addressing and the movements that result from such addressing. Additionally, the implementations of Figures 6A-6E can simplify processing, such as patterning.

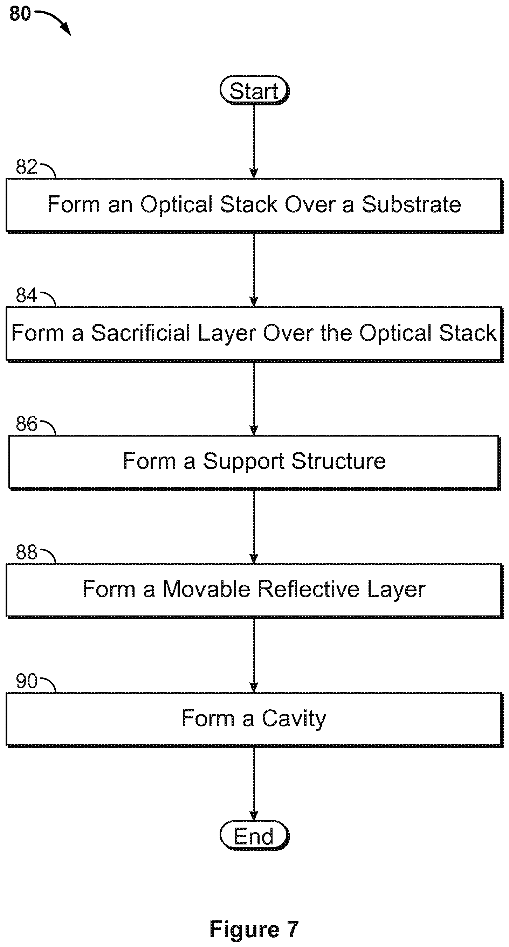

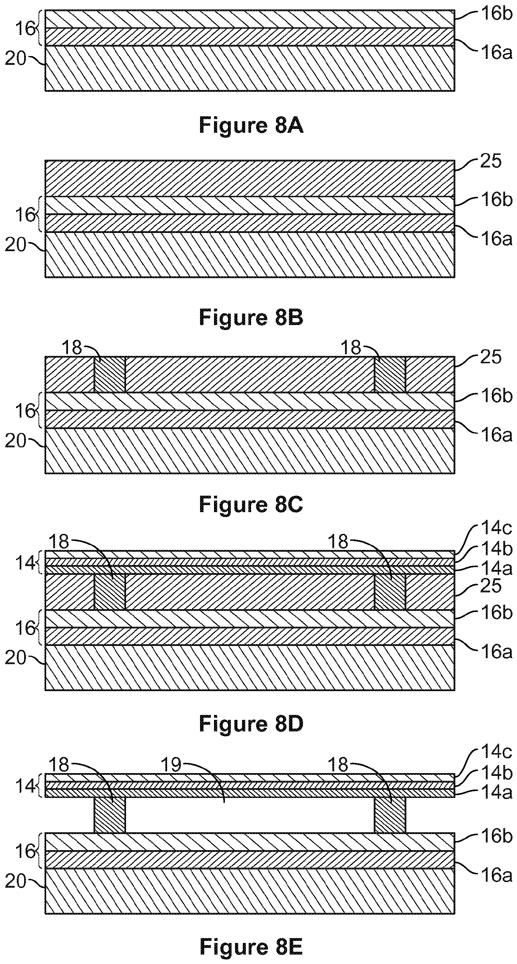

Figure 7 shows an example of a flow diagram illustrating a manufacturing process 80 for an IMOD, and Figures 8A-8E show examples of cross-sectional schematic illustrations of corresponding stages of such a manufacturing process 80. In some implementations, the manufacturing process 80 can be implemented to manufacture, e.g., IMODs of the general type illustrated in Figures 1 and 6, in addition to other blocks not shown in Figure 7. With reference to Figures 1, 6 and 7, the process 80 begins at block 82 with the formation of the optical stack 16 over the substrate 20. Figure 8A illustrates such an optical stack 16 formed over the substrate 20. The substrate 20 may be a transparent substrate such as glass or plastic, it may be flexible or relatively stiff and unbending, and may have been subjected to prior preparation processes, e.g., cleaning, to facilitate efficient formation of the optical stack 16. As discussed above, the optical stack 16 can be electrically conductive, partially transparent and partially reflective and may be fabricated, for example, by depositing one or more layers having the desired properties onto the transparent substrate 20. In Figure 8A, the optical stack 16 includes a multilayer structure having sub-layers 16a and 16b, although more or fewer sub-layers may be included in some other implementations. In some implementations, one of the sub-layers 16a, 16b can be configured with both optically absorptive and conductive properties, such as the combined conductor/absorber sub-layer 16a. Additionally, one or more of the sub-layers 16a, 16b can be patterned into parallel strips, and may form row electrodes in a display device. Such patterning can be performed by a masking and etching process or another suitable process known in the art. In some implementations, one of the sub-layers 16a, 16b can be an insulating or dielectric layer, such as sub-layer 16b that is deposited over one or more metal layers (e.g., one or more reflective and/or conductive layers). In addition, the optical stack 16 can be patterned into individual and parallel strips that form the rows of the display.

The process 80 continues at block 84 with the formation of a sacrificial layer 25 over the optical stack 16. The sacrificial layer 25 is later removed (e.g., at block 90) to form the cavity 19 and thus the sacrificial layer 25 is not shown in the resulting IMODs 12 illustrated in Figure 1. Figure 8B illustrates a partially fabricated device including a sacrificial layer 25 formed over the optical stack 16. The formation of the sacrificial layer 25 over the optical stack 16 may include deposition of a xenon difluoride (XeF₂)-etchable material such as molybdenum (Mo) or amorphous silicon (Si), in a thickness selected to provide, after subsequent removal, a gap or cavity 19 (see also Figures 1 and 8E) having a desired design size. Deposition of the sacrificial material may be carried out using deposition techniques such as physical vapor deposition (PVD, e.g., sputtering), plasma-enhanced chemical vapor deposition (PECVD), thermal chemical vapor deposition (thermal CVD), or spin-coating.

The process 80 continues at block 86 with the formation of a support structure e.g., a post 18 as illustrated in Figures 1, 6 and 8C. The formation of the post 18 may include patterning the sacrificial layer 25 to form a support structure aperture, then depositing a material (e.g., a polymer or an inorganic material, e.g., silicon oxide) into the aperture to form the post 18, using a deposition method such as PVD, PECVD, thermal CVD, or spin-coating. In some implementations, the support structure aperture formed in the sacrificial layer can extend through both the sacrificial layer 25 and the optical stack 16 to the underlying substrate 20, so that the lower end of the post 18 contacts the substrate 20 as illustrated in Figure 6A. Alternatively, as depicted in Figure 8C, the aperture formed in the sacrificial layer 25 can extend through the sacrificial layer 25, but not through the optical stack 16. For example, Figure 8E illustrates the lower ends of the support posts 18 in contact with an upper surface of the optical stack 16. The post 18, or other support structures, may be formed by depositing a layer of support structure material over the sacrificial layer 25 and patterning portions of the support structure material located away from apertures in the sacrificial layer 25. The support structures may be located within the apertures, as illustrated in Figure 8C, but also can, at least partially, extend over a portion of the sacrificial layer 25. As noted above, the patterning of the sacrificial layer 25 and/or the support posts 18 can be performed by a patterning and etching process, but also may be performed by alternative etching methods.

The process 80 continues at block 88 with the formation of a movable reflective layer or membrane such as the movable reflective layer 14 illustrated in Figures 1, 6 and 8D. The movable reflective layer 14 may be formed by employing one or more deposition processes, e.g., reflective layer (e.g., aluminum, aluminum alloy) deposition, along with one or more patterning, masking, and/or etching processes. The movable reflective layer 14 can be electrically conductive, and referred to as an electrically conductive layer. In some implementations, the movable reflective layer 14 may include a plurality of sub-layers 14a, 14b, 14c as shown in Figure 8D. In some implementations, one or more of the sub-layers, such as sub-layers 14a, 14c, may include highly reflective sub-layers selected for their optical properties, and another sub-layer 14b may include a mechanical sub-layer selected for its mechanical properties. Since the sacrificial layer 25 is still present in the partially fabricated IMOD formed at block 88, the movable reflective layer 14 is typically not movable at this stage. A partially fabricated IMOD that contains a sacrificial layer 25 also may be referred to herein as an "unreleased" IMOD. As described above in connection with Figure 1, the movable reflective layer 14 can be patterned into individual and parallel strips that form the columns of the display.

The process 80 continues at block 90 with the formation of a cavity, e.g., cavity 19 as illustrated in Figures 1, 6 and 8E. The cavity 19 may be formed by exposing the sacrificial material 25 (deposited at block 84) to an etchant. For example, an etchable sacrificial material such as Mo or amorphous Si may be removed by dry chemical etching, e.g., by exposing the sacrificial layer 25 to a gaseous or vaporous etchant, such as vapors derived from solid XeF₂ for a period of time that is effective to remove the desired amount of material, typically selectively removed relative to the structures surrounding the cavity 19. Other combinations of etchable sacrificial material and etching methods, e.g. wet etching and/or plasma etching, also may be used. Since the sacrificial layer 25 is removed during block 90, the movable reflective layer 14 is typically movable after this stage. After removal of the sacrificial material 25, the resulting fully or partially fabricated IMOD may be referred to herein as a "released" IMOD.

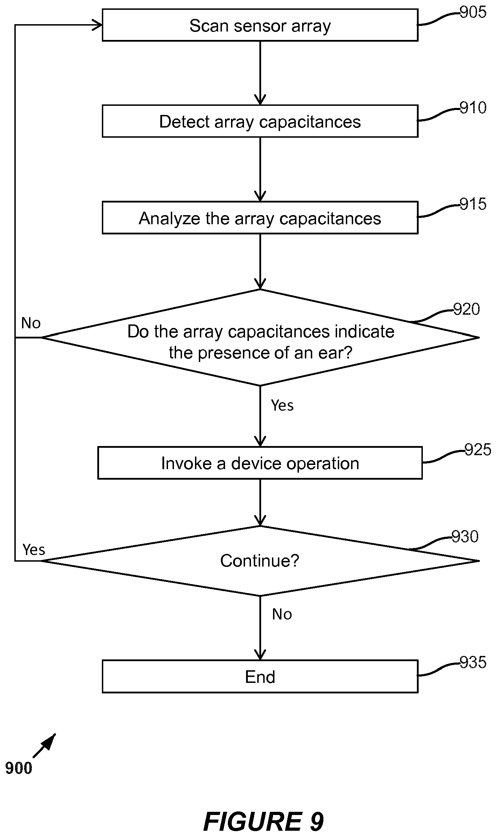

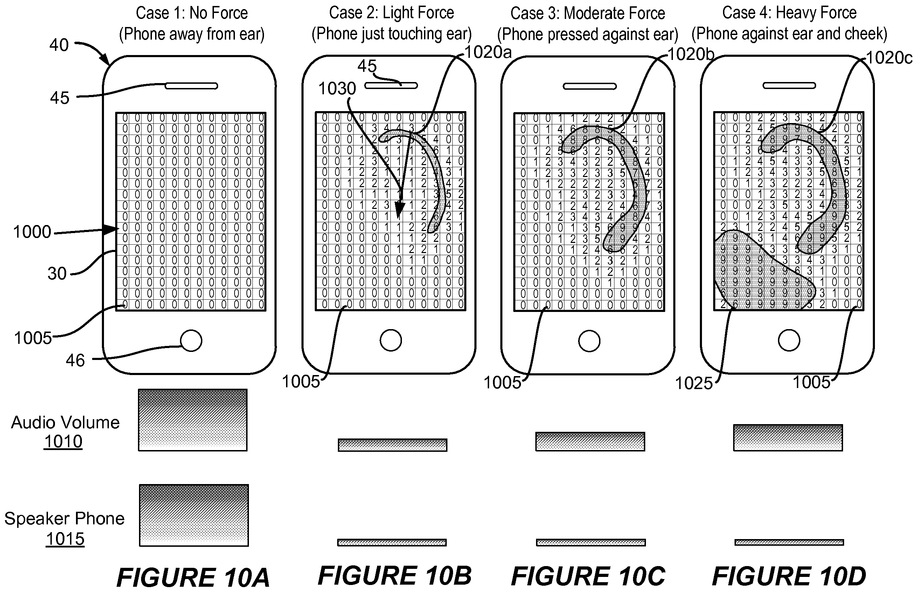

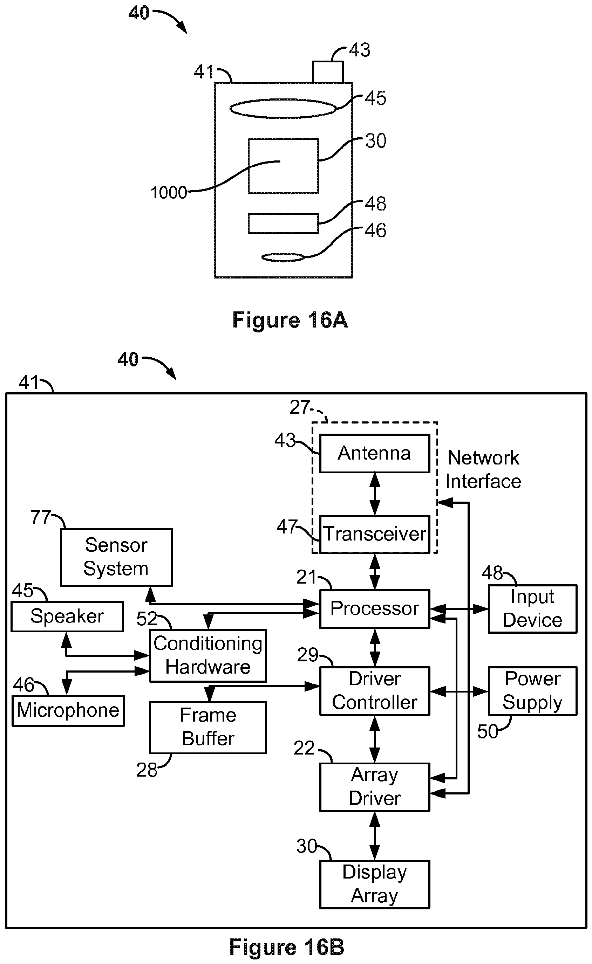

Figure 9 shows an example of a flow diagram illustrating blocks of a method of invoking device operations when the presence of an ear is detected. The method 900 may be performed, at least in part, by a logic system of a mobile device, such as the display devices 40 shown in Figures 10A-10K, 16A or 16B. The logic system may include a general purpose single- or multi-chip processor, a digital signal processor (DSP), an application specific integrated circuit (ASIC), a field programmable gate array (FPGA) or other programmable logic device, discrete gate or transistor logic, discrete hardware components, or any combination thereof. As with other methods described herein, the blocks of method 900 are not necessarily performed in the order shown. Alternative implementations of the method 900 may include more or fewer blocks.

In this example, the method 900 begins with a process of scanning a sensor array (block 905). In some implementations, block 905 involves scanning a touch sensor array, such as a projected capacitive touch sensor array. Accordingly, in this example block 910 involves detecting array capacitances of a touch sensor array. , blocks 905 and/or 910 also may involve receiving sensor signals from other types of sensors, such as a pressure sensor, an infrared (IR) sensor, an accelerometer, a gyroscope, an orientation sensor, and/or a camera. In some implementations, the sensor signals from the other types of sensors may be received to augment the signals from the touch sensor array.

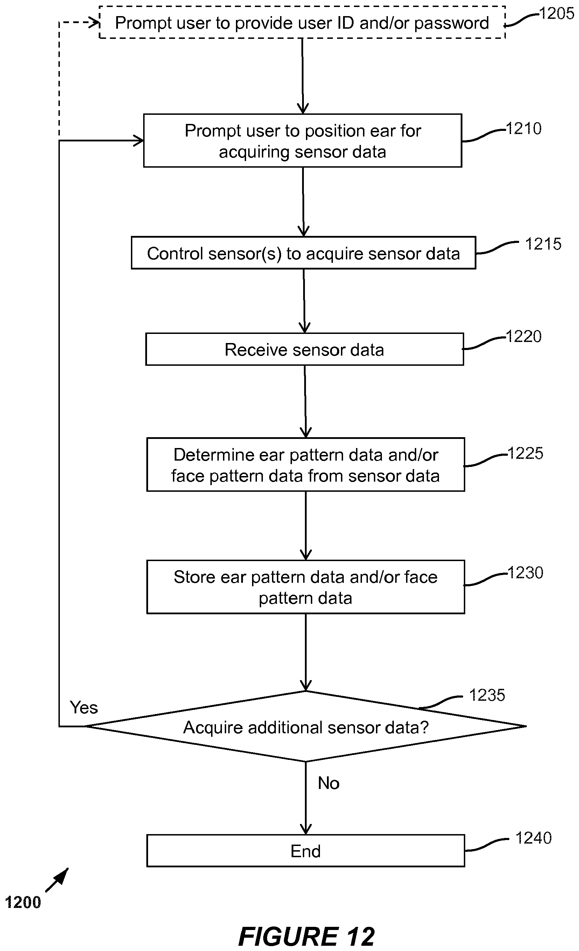

The sensor signals may then be analyzed. In the example shown in block 915, array capacitances of the touch sensor array are analyzed. It may then be determined whether the array capacitances indicate the presence of an ear, such as an ear of a user of a mobile device. Blocks 915 and/or 920 may involve a number of sub-processes, such as determining a pattern of array capacitance values and comparing the pattern to ear pattern data and/or face pattern data stored in a memory. The ear pattern data and/or face pattern data may have been previously acquired and stored during a "setup" or registration process. Some examples are described below with reference to Figure 12.

When it is determined in block 920 that the sensor signals (in this example, the array capacitances) indicate the presence of an ear, one or more device operations may be invoked in block 925. A device operation may involve controlling at least one speaker of a cell phone. A device operation may involve switching to a speaker phone mode, switching to a normal audio mode, adjusting a volume of an audio output device, adjusting a directionality of an audio output device, adjusting a directionality of a microphone, etc. For example, when the presence of an ear is detected, the volume of a cell phone speaker may be reduced. In a second example, when the presence of an ear or of a particular ear is detected, the cell phone may be unlocked or powered up. In a third example, a voice recognition capability may be invoked or negated when the presence of an ear is detected. Other examples are described below.

In block 930, it is determined whether the method 900 will continue. For example, in block 930, a logic system of a mobile device (such as the display devices 40 shown in Figures 10A-10K, 16A or 16B) may receive user input indicating that the method 900 will terminate. For example, the logic system may receive input that the mobile device will be switched off, that the mobile device will be operated in a gaming mode, etc. If so, the method 900 may end, as shown in block 935.

Figures 10A-10D show examples of various ear detection states of a projected capacitive touch sensor array and corresponding speaker settings. In these examples, the display device 40 includes a cell phone with a touch sensor array 1000 positioned over the display array 30. Here, the touch sensor array 1000 is a projected capacitive touch sensor array. However, alternative implementations may include another type of touch sensor array, such as a digital resistive touch (DRT) sensor array.

The row 1010 includes a rectangle for each of Figures 10A-10D. Each rectangle indicates a corresponding audio volume for the speaker 45. The row 1015 indicates whether the cell phone will be used in "speaker phone" mode: the large rectangle in the row 1015 of Figure 10A indicates that the cell phone is configured for speaker phone mode, whereas the small rectangles in the row 1015 of Figures 10B-10D indicate that the cell phone is not configured for speaker phone mode. In addition to the increased audio volume indicated for the case of Figure 10A, in some implementations the sensitivity of the microphone 46 may be increased when the cell phone is configured for speaker phone mode.

The touch sensor array 1000 includes a plurality of sensor elements or "sensels" 1005. In Figures 10A-10D, each sensel 1005 is shown with a number between zero and nine. This number represents the detected capacitance change for each sensel 1005 from a baseline level. Such changes may be caused by the presence of a conductive material, such as a finger, a conductive stylus, an ear, the side of a face, etc. These numbers are shown merely by way of illustration; an actual touch sensor would generally not display such numbers, nor do the changes need be represented by a number between 0 and 9 inclusively. For example, the values of the capacitance or capacitance changes may be represented by a signed or unsigned binary number with four to fourteen bits of data.

In the example shown by Figure 10A, all of the sensels 1005 indicate a value of zero, which is the baseline value in this example. Figure 10A represents an instance during which the array capacitances indicate the presence of no external material in the vicinity of the touch sensor array 1000. Accordingly, in block 920 of Figure 9, the logic system may determine that the array capacitances do not indicate the presence of an ear. In this example, when the cell phone of the display device 40 is in use, the cell phone may be configured for speaker phone mode when no ear is detected.

In Figure 10B, many of the sensels 1005 indicate non-zero array capacitance values. In this example, Figure 10B represents an instance during which the array capacitances indicate an ear lightly touching the touch sensor array 1000. In some such implementations, an ear touch zone 1020a will be determined, e.g., according to a contouring or pattern recognition program. In this example, ear touch zone 1020a roughly corresponds to a surface contact area between an ear and the display array 30. Accordingly, in block 925 of Figure 9, a device operation is invoked: the cell phone will not be configured for speaker phone mode because an ear is detected. In this example, because a light ear touch has been detected, the audio volume is set at a relatively low level. A light ear touch corresponds to a fewer number of sensels 1005 detecting contact, or a value change from baseline that is relatively lower than a value corresponding to a heavier ear touch. In some implementations, the audio volume level will be based, at least in part, on the area of the ear touch zone 1020a.

In Figure 10C, many of the sensels 1005 indicate higher array capacitance values than those of Figure 10B. Therefore, the area of the ear touch zone 1020b is determined to be relatively larger than that of the ear touch zone 1020a. In this example, Figure 10C represents an instance during which an ear is being pressed against the touch sensor array 1000 with a moderate force. Accordingly, in block 925 of Figure 9, a slightly different device operation is invoked: because a moderate ear touch has been detected, the audio volume is set at a relatively higher level than in the example shown in Figure 10B. In some such implementations, the audio volume level will be increased, based on an assumption that a user is pressing his or her ear against the cell phone with increased force in an attempt to hear more clearly the sounds from the speaker 45. However, the audio volume may be adjusted differently in alternative implementations.

In Figure 10D, many of the sensels 1005 indicate yet higher array capacitance values than those of Figure 10C. Therefore, the area of the ear touch zone 1020c is determined to be even larger than that of the ear touch zone 1020b. Figure 10D represents an instance during which an ear is being pressed against the touch sensor array 1000 with a substantial, heavy force. In this example, part of the user's face is also being pressed against the touch sensor array 1000, such that a face touch zone 1025 is detected in block 920 of Figure 9. Accordingly, in block 925 of Figure 9, a slightly different device operation is invoked than in the example of Figure 10C: because a heavier ear touch has been detected, the audio volume is set at a relatively higher level than in the example shown in Figure 10C.

In alternative implementations, other device operations may be invoked in block 925. In some such implementations, the device operation may involve tracking an ear position and/or orientation. Microphone, speaker and/or other device functionality may be adjusted according to the ear position and/or orientation. For example, referring to Figure 10B, when it is determined that the ear touch zone 1020a moves downward, such as in the direction of the arrow 1030, the user's ear will be farther from the speaker 45. In some implementations, the audio volume may be increased in order to compensate for this change in ear position relative to the speaker 45. Microphone sensitivity also may be adjusted according to a determined change in a user's mouth position, which may be inferred from an ear rotation or translation.

In some implementations, the device operations invoked in block 925 may involve voice commands and/or voice recognition functionality. According to some such implementations, a device may control voice recognition functionality according to whether an ear and/or an ear gesture is detected. For example, a voice recognition feature may be turned on or turned off when an ear is detected.

Alternatively, or additionally, the device operation of block 925 may involve recognizing a characteristic pattern of an ear and/or a portion of a face. In some implementations, block 925 may involve detecting a left ear, detecting a right ear, and/or recognizing a particular ear. In some such implementations, ear recognition may be used as a type of user authentication. For example, an ear recognition process may be used in lieu of (or in addition to) an authorization code, such as a personal identification number (PIN). In some implementations, the ear recognition process may invoke device operations for accessing a mobile device, unlocking a mobile device, etc.

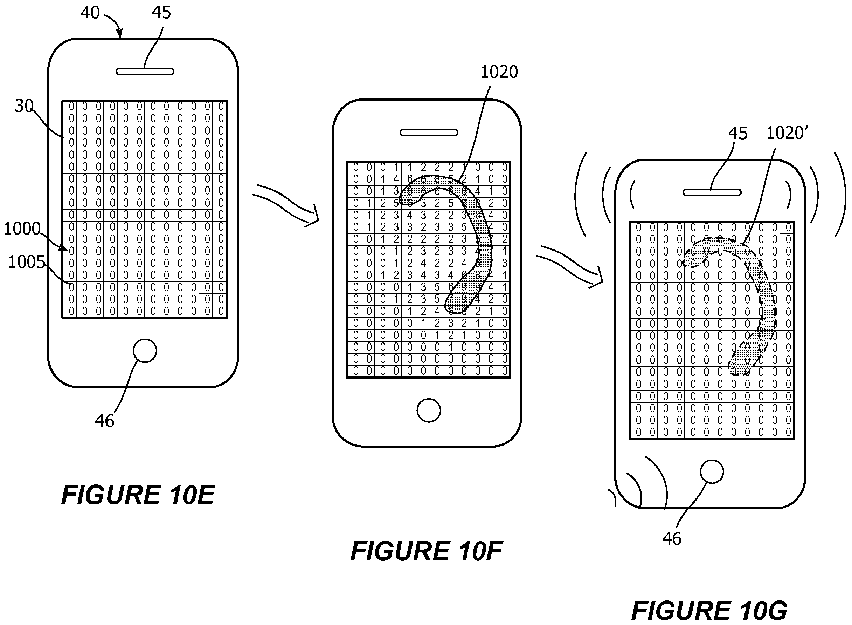

Figures 10E-10G show an example of unlocking or turning on a mobile device for a phone conversation when the presence of an ear is detected. The mobile display device 40 with speaker 45 and microphone 46 has a display array 30 including an overlaid or integral touch sensor array 1000. The sensor elements or sensels 1005 of the touch sensor array 1000 illustratively show in Figure 10E small or essentially zero capacitance changes at each sensel. When a user, for example, hears a ringtone or an indicator of an incoming call or chooses to place an outgoing call, the display device 40 may be positioned near an ear of the user as indicated by ear touch zone 1020 in Figure 10F to unlock, power up, or otherwise initiate one or more functions of the device, and allow the user to commence with speaking or listening to a phone conversation, as indicated in Figure 10G. The user may listen, for example, to sound emanating from speaker 45 or speak into microphone 46. The user's ear may continue to be pressed against the ear touch zone 1020' of the mobile device, or pulled away from the mobile device for speaker phone operation or for interaction with the touch sensor array 1000 using one or more fingers.

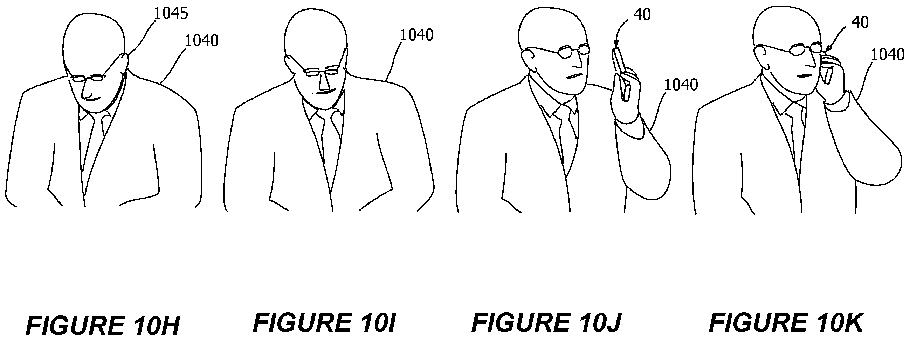

Figures 10H-10K show an example of a user of a mobile device with and without an ear-detection capability. A user 1040 with an ear 1045 may fumble with a mobile device as shown in Figures 10H and 10I, before bringing the mobile display device 40 towards the user's head, as shown in Figure 10J. Alternatively, a user 1040 with a mobile display device 40 having ear position or gesture detection capability may immediately bring the mobile device to the ear without fumbling with the device, as shown in Figure 10K, thereby avoiding the need to either look at the mobile device or touch particular locations on a touchscreen of the mobile device before device operation is allowed.

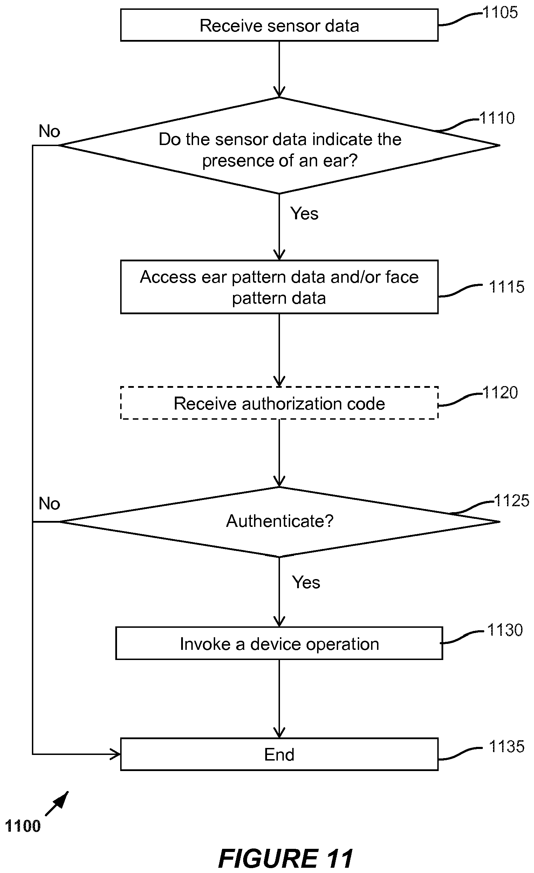

Figure 11 shows an example of a flow diagram illustrating blocks of an ear authentication method. Method 1100 may be performed, at least in part, by a logic system of a display device 40. In this example, method 1100 begins with block 1105, in which sensor data are received by the logic system. The sensor data may include signals from a touch sensor, such as the touch sensor array 1000. Alternatively, or additionally, the sensor data also may include data from a camera, an infrared (IR) sensor, a pressure sensor, an accelerometer, a gyroscope, an orientation sensor, and/or another type of sensor.

In block 1110, the logic system determines whether the sensor data indicated the presence of an ear. If so, ear pattern and/or face pattern data are accessed by the logic system in block 1115. Such data may be stored in a storage medium of the display device or of another device, e.g., by a storage device accessible by the logic system via a network.

Implementations that enable ear and/or face recognition to be used as a type of user authentication can provide varying levels of device security. In some implementations, an ear recognition/authentication process alone may be sufficient to invoke device operations, such as allowing device access or unlocking or powering up a mobile device. Using an ear recognition process in addition to an authorization code can provide a relatively higher level of security. However, requiring the use of an authorization code may be less convenient for users. Accordingly, in some implementations method 1100 includes an optional process of receiving an additional authorization code, such as a PIN, an alphanumeric password or passcode, a voice recognition input, etc. as shown in optional block 1120.

In block 1125, the logic system determines whether the stored ear pattern data match the sensor data received in block 1105. When an authorization code is received in optional block 1120, the logic system also may determine whether the authorization code is correct.

If the authentication process of block 1125 is successful, one or more device operations may be invoked in block 1130. In some implementations, block 1130 may involve allowing access to other functions of a mobile device. A user may, for example, be able to initiate a cell phone call, unlock a device, use a web browser, access an account, etc.

In this example, method 1100 ends (block 1135) after the device operation is invoked. Method 1100 also ends if the authentication process of block 1125 fails, e.g., for a predetermined number of times or the sensor data do not indicate the presence of an ear in block 1110. However, in alternative implementations, method 1100 may continue if, for example, the sensor data do not initially indicate the presence of an ear in block 1110. Sensor data may continue to be received in block 1105 and evaluated in block 1110 for a predetermined time and/or until the occurrence of one or more predetermined conditions.

The ear authentication method described above involves the use of previously-acquired ear pattern and/or face pattern data. Some implementations described herein provide methods for acquiring and storing such data. Figure 12 shows an example of a flow diagram illustrating blocks of a method for acquiring and storing ear pattern data and/or face pattern data. Method 1200 may be performed, at least in part, by a logic system of a display device 40. In some implementations, the blocks of method 1200 may be sub-processes of block 925 (see Figure 9).

In this example, method 1200 begins with optional block 1205, in which a user is prompted to enter a user identification code and/or a password. Such information may, for example, be used to associate a particular user with a set of ear pattern and/or face pattern data. In block 1210, a user is prompted to position an ear for acquiring sensor data. The prompts may, for example, indicate where the user's ear should be positioned. In some implementations, block 1210 may involve a visual prompt that is displayed on a display device.

Alternatively, or additionally, block 1210 may involve audio prompts. Audio prompts may be advantageous if ear pattern data are to be acquired from a sensor or a sensor array that is located near a display. For example, audio prompts may be advantageous if ear pattern data are to be acquired from a touch sensor array, because a user will not generally be able to see the touch sensor array when the user's ear is pressed against the display device. Even if the sensor data will be acquired by another type of sensor, audio prompts may still be advantageous. Due to the small size of many display devices 40, it may be difficult for a user to see prompts displayed on the display array 30 while sensor data are being acquired from the user's ear.

If ear pattern data are to be acquired from a touch sensor array, in some implementations the prompts may indicate how hard the user should press an ear against the touch sensor array. For example, the display device 40 may include one or more pressure or force sensors. When a user is pressing the ear against the touch sensor array, the pressure sensor(s) may indicate corresponding pressure data. A logic system of the display device 40 may be configured to receive the pressure data from the pressure sensor(s), to determine whether the ear is being pressed hard enough against the touch sensor array, too hard, etc. In some implementations, the logic system may be configured to control the speaker 45 to provide corresponding voice prompts to the user.

When the ear is positioned properly, the logic system may control the sensor(s) to acquire the sensor data (block 1215). In some implementations, the raw sensor data may be stored. In alternative implementations, as here, a logic system will receive the sensor data (block 1220) and determine ear pattern data and/or face pattern data from the sensor data (block 1225). In some implementations, the logic system may determine the ear pattern data and/or face pattern data according to an algorithm, such as a contouring or pattern recognition algorithm. In some such implementations, sensor array data, such as array capacitances, may be input into the algorithm. The ear touch zones 1020a-1020c shown in Figures 10B-10D provide examples of contoured ear patterns that may be output from such algorithms. The ear pattern data and/or face pattern data may be stored in block 1230.

In block 1235, it is determined whether additional sensor data will be acquired. This determination may be made by the logic system and/or according to user input. In some implementations, more than one type of sensor data will be acquired for a user. In other implementations, multiple instances of the same type of sensor data will be acquired for a user. For example, a user may be prompted so that sensor data may be acquired with the user's ear in more than one position. The user may be prompted so that data may be acquired for a left ear and a right ear. The user may be prompted so that data may be acquired at varying pressures, such as the varying pressures indicated in Figures 10B-10D. If sensor data will be acquired for another user, in some implementations the process will revert to block 1205. The process ends with block 1240.

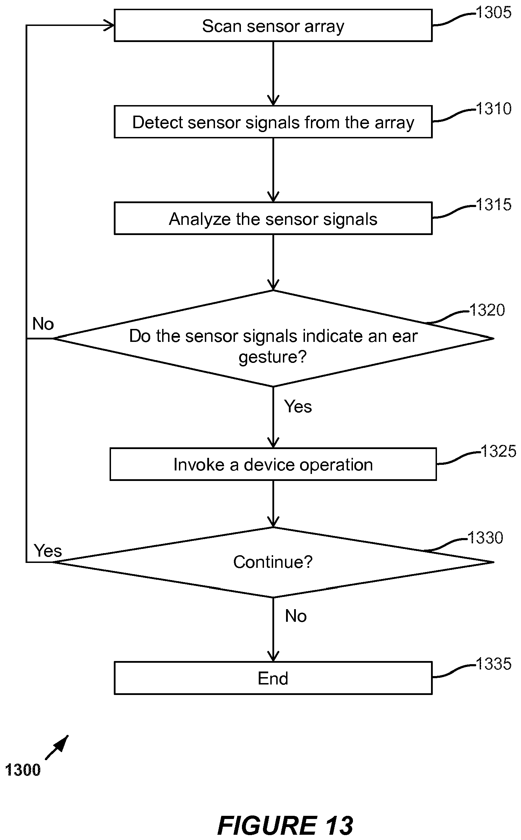

Some implementations involve detecting an ear gesture and controlling a device according to the ear gestures. Figure 13 shows an example of a flow diagram illustrating blocks of a method of invoking device operations when an ear gesture is detected. Method 1300 may be performed, at least in part, by a logic system of a mobile device. In this example, the method 1300 begins with a process of scanning a sensor array (block 1305) and detecting sensor signals from the array (block 1310). In some implementations, block 1305 involves scanning a touch sensor array, such as a projected capacitive touch sensor array. However, blocks 1305 and/or 1310 also may involve receiving sensor signals from other types of sensors, such as a pressure sensor, an IR sensor, an accelerometer, a gyroscope, an orientation sensor, and/or a camera.

The sensor signals may then be analyzed (block 1315). In the example shown in block 1315, array capacitances of the touch sensor array are analyzed. It may then be determined whether the array capacitances indicate not only the presence of an ear, but of an ear gesture (block 1320). The ear gesture may be, for example, an ear touch, an ear press, an ear swipe, an ear rotation, an ear position, an ear distance, and/or an ear motion. Although the term "ear gesture" is used herein, an ear gesture may be caused primarily by force and/or motion of a hand holding a mobile device against the ear while the ear remains relatively stationary. Alternatively, or additionally, the ear gesture may actually be caused, at least in part, by force and/or motion of the ear while the mobile device remains relatively stationary.

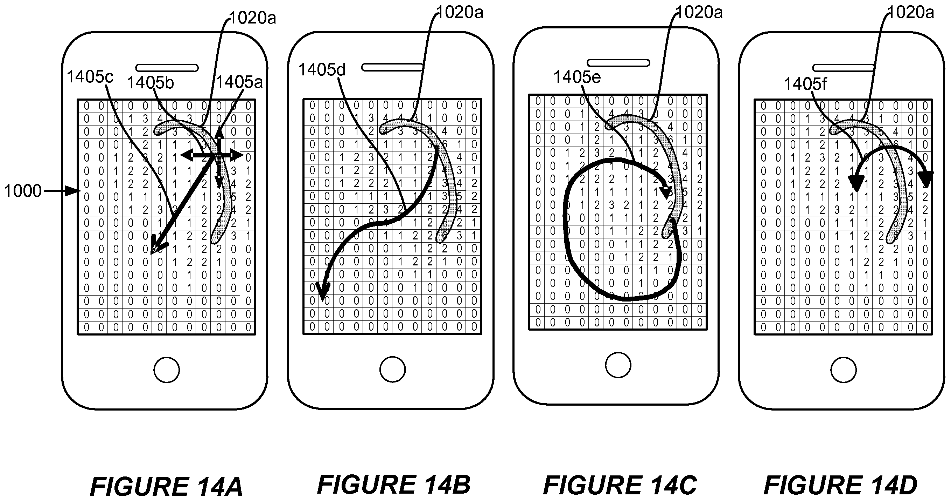

Figures 14A-14D show examples of ear gestures. In some implementations, each of the ear gestures, as well as other ear gestures not shown in these examples, may be associated with a device operation. In these examples, the ear touch zone 1020a corresponds to the "light force" condition of Figure 10B, as detected by a touch sensor. However, ear gestures may be detected by a variety of sensors. If the ear gestures are detected by a touch sensor, ear gestures also may be made when the ear is pressed against the touch sensor with a moderate force or a heavy force, for example as shown in Figures 10C and 10D.

Figure 14A shows examples of linear ear swipes. In these examples, the ear gesture 1405a is a substantially linear swipe along columns of the touch sensor array 1000, the ear gesture 1405b is a substantially linear swipe along rows of the touch sensor array 1000. The ear gesture 1405c is a substantially diagonal swipe along rows and columns of the touch sensor array 1000. Each of these ear gestures may be associated with device operations.

The direction of the swipe may or may not matter, depending on the implementation. In some implementations, for example, the same device operation(s) may be associated with the ear gesture 1405a, regardless of whether an upward or a downward ear swipe is detected. In alternative implementations, a downward swipe may be associated with a first device operation and an upward swipe may be associated with a second device operation.

When one of these ear gestures is detected, the logic system may determine that the corresponding sensor signals indicate a type of ear gesture in block 1320 (see Figure 13). A corresponding device operation may be invoked in block 1325. The trajectories of the ear gestures 1405a-1405c are merely made by way of example; for example, diagonal ear swipes having other trajectories could be registered as ear gestures and associated with device operations.

Other ear gestures do not necessarily involve swipes along substantially straight lines. For example, referring to Figure 14B, the ear gesture 1405d is a swipe along a curved line. Other ear gestures may involve swipes along simpler or more complex trajectories or patterns. In the example shown in Figure 14C, the ear gesture 1405e is a swipe in a generally oval pattern. Alternative ear gestures may involve swipes in other types of patterns, such as circular patterns, square patterns, rectangular patterns, triangular patterns, sequences of gestures separated by temporary withdrawal of the device from the ear, etc.

In some implementations, an ear gesture may be associated with the shape of a pattern and not necessarily with the orientation of the pattern. For example, in some implementations a triangular ear gesture may be recognized by a detected triangular pattern, regardless of the orientation of each side of the triangle relative to rows or columns of a sensor array.

Various other types of ear gestures are provided herein. Some such ear gestures do not necessarily involve swipes along substantially straight or curved lines. For example, ear gesture 1405f of Figure 14D provides an example of rotational ear gestures. In some such implementations, a clockwise ear gesture may be associated with a first device operation and a counterclockwise ear gesture may be associated with a second device operation. For example, a counterclockwise gesture may be associated with accepting an incoming call, and a clockwise gesture may be associated with hanging up the phone or ending the call.

Figures 10B-10D also provide examples of ear gestures. These drawings show examples of "ear press" types of ear gestures. When a logic system of the display device 40 determines that the ear pressure has changed from the "light force" condition of Figure 10B to the condition of Figure 10C or 10D, the logic system may determine that the corresponding sensor signals indicate a type of ear gesture in block 1320 (see Figure 13). Accordingly, a device operation may be invoked in block 1325. The device operation may involve switching to a speaker phone mode, switching to a normal audio mode, adjusting a volume of an audio output device, adjusting a directionality of an audio output device, adjusting a directionality of a microphone, etc.

In block 1330 of Figure 13, it is determined whether the method 1300 will continue. This determination may be made by the logic system and/or according to user input. In this example, if method 1300 will continue, the process reverts to block 1305. If not, the process ends, as in block 1335.

Some implementations may involve machine learning processes for associating a detected ear or a detected ear gesture with a device operation. Some such learning processes may include receiving and storing user input regarding device functionality. Some implementations may include registration or calibration procedures.

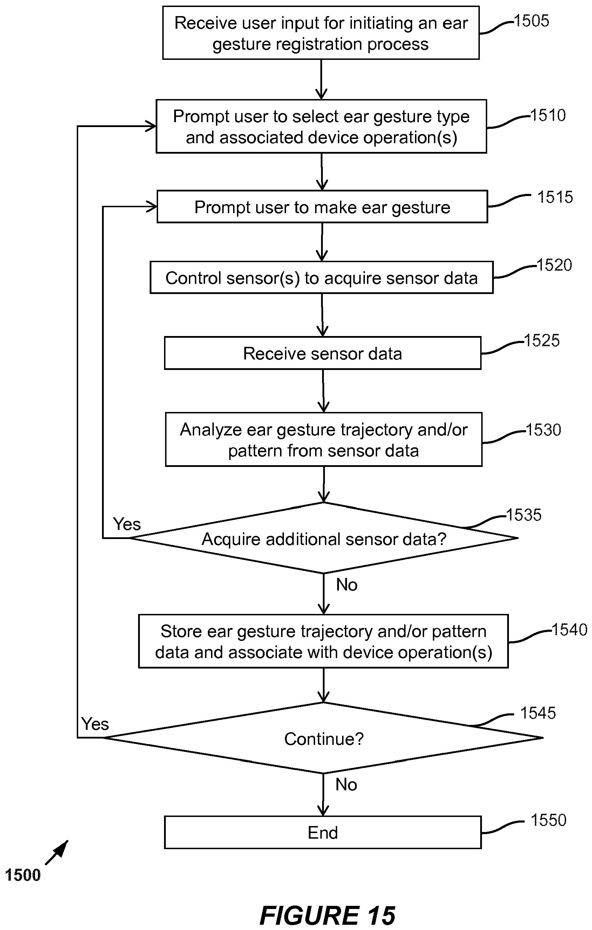

Figure 15 shows an example of a flow diagram illustrating blocks of an ear gesture registration method. Method 1500 may be performed, at least in part, by a logic system of a mobile device such as the display device 40. In this example, method 1500 begins when the logic system receives user input for initiating an ear gesture registration process, as in block 1505. Such input may, for example, be received as sensor signals corresponding to a user's interaction with the touch sensor array 1000, as a voice command received via the microphone 46, etc.

In this example, the user is prompted to select an ear gesture type and a device operation to associate with the ear gesture (block 1510). For example, the user may be prompted to indicate whether the ear gesture will be a substantially linear ear swipe, a curved ear swipe, a pattern (circular, oval, triangular, etc.), an ear press, a sequence of gestures, etc. In some implementations, block 1510 may involve receiving user input regarding a first desired speaker volume level to be applied when a cell phone is pressed against the user's ear with a first pressure and/or regarding a second desired speaker volume level to be applied when the cell phone is pressed against the user's ear with a second pressure.

In some implementations, however, the user may not be prompted to indicate the type of ear gesture. Instead, the ear gesture trajectory and/or pattern type may be determined according to received sensor data.

Some implementations also may involve associating the ear gesture type and the device operation(s) with a particular user. For example, the user may be prompted to enter user information, such as a user name, a user ID and/or a password or passcode.

In block 1515, the user may be prompted to make the ear gesture. One or more sensors may be controlled to acquire sensor data (block 1520), which may be received by a logic device in block 1525. The logic device may analyze the sensor data to determine a corresponding ear gesture trajectory and/or pattern (block 1530). For example, block 1530 may involve determining whether the ear gesture trajectory and/or pattern type detected by the sensor(s) corresponds to the type indicated by the user in block 1510. If not, the logic system may determine that additional sensor data should be acquired (block 1535). Accordingly, the process may revert to block 1515. In some implementations, the logic system may acquire multiple instances of an ear gesture trajectory and/or pattern even if the first instance is satisfactory.

If it is determined in block 1535 that no additional sensor data will be acquired for the ear gesture trajectory and/or pattern, the ear gesture trajectory and/or pattern data may be stored and associated with the indicated device operation(s), as shown in block 1540. In block 1545, it is determined whether the process will continue. For example, the logic system may prompt the user for input regarding whether additional ear gesture trajectory and/or pattern data is or will be acquired. If so, the process may revert to block 1510. If not, the process may end, as in block 1550.

Figures 16A and 16B show examples of system block diagrams that illustrate a display device that may be configured to perform at least some methods described herein. The display device 40 can be, for example, a cellular or mobile telephone. However, the same components of the display device 40 or slight variations thereof are also illustrative of various types of display devices such as televisions, e-readers and portable media players.

The display device 40 includes a housing 41, a display 30, a touch sensor array 1000, an antenna 43, a speaker 45, an input device 48, and a microphone 46. The housing 41 can be formed from any of a variety of manufacturing processes, including injection molding, and vacuum forming. In addition, the housing 41 may be made from any of a variety of materials, including, but not limited to: plastic, metal, glass, rubber, and ceramic, or a combination thereof. The housing 41 can include removable portions (not shown) that may be interchanged with other removable portions of different color, or containing different logos, pictures, or symbols.

The display 30 may be any of a variety of displays, including a bi-stable or analog display, as described herein. The display 30 also can be configured to include a flat-panel display, such as plasma, EL, OLED, STN LCD, or TFT LCD, or a non-flat-panel display, such as a CRT or other tube device. In addition, the display 30 can include an IMOD display, as described herein.

The components of the display device 40 are schematically illustrated in Figure 16B. The display device 40 includes a housing 41 and can include additional components at least partially enclosed therein. For example, the display device 40 includes a network interface 27 that includes an antenna 43 which is coupled to a transceiver 47. The transceiver 47 is connected to a processor 21, which is connected to conditioning hardware 52. The conditioning hardware 52 may be configured to condition a signal (e.g., filter a signal). The conditioning hardware 52 is connected to a speaker 45 and a microphone 46. The processor 21 is also connected to an input device 48 and a driver controller 29. The driver controller 29 is coupled to a frame buffer 28, and to an array driver 22, which in turn is coupled to a display array 30. A power supply 50 can provide power to all components as required by the particular display device 40 design.

In this example, the display device 40 also includes a sensor system 77. In this example, the sensor system 77 includes the touch sensor array 1000. The sensor system 77 also may include other types of sensors, such as one or more cameras, pressure sensors, infrared (IR) sensors, accelerometers, gyroscopes, orientation sensors, etc. In some implementations, the sensor system 77 may include part of the logic system of the display device 40. For example, the sensor system 77 may include a touch controller that is configured to control, at least in part, the operations of the touch sensor array 1000. In alternative implementations, however, the processor 21 (or another such device) may be configured to provide some or all of this functionality.

The network interface 27 includes the antenna 43 and the transceiver 47 so that the display device 40 can communicate with one or more devices over a network. The network interface 27 also may have some processing capabilities to relieve, e.g., data processing requirements of the processor 21. The antenna 43 can transmit and receive signals. In some implementations, the antenna 43 transmits and receives RF signals according to the IEEE 16.11 standard, including IEEE 16.11 (a), (b), or (g), or the IEEE 802.11 standard, including IEEE 802.11 a, b, g or n. In some other implementations, the antenna 43 transmits and receives RF signals according to the BLUETOOTH standard. In the case of a cellular telephone, the antenna 43 is designed to receive code division multiple access (CDMA), frequency division multiple access (FDMA), time division multiple access (TDMA), Global System for Mobile communications (GSM), GSM/General Packet Radio Service (GPRS), Enhanced Data GSM Environment (EDGE), Terrestrial Trunked Radio (TETRA), Wideband-CDMA (W-CDMA), Evolution Data Optimized (EV-DO), 1xEV-DO, EV-DO Rev A, EV-DO Rev B, High Speed Packet Access (HSPA), High Speed Downlink Packet Access (HSDPA), High Speed Uplink Packet Access (HSUPA), Evolved High Speed Packet Access (HSPA+), Long Term Evolution (LTE), AMPS, or other known signals that are used to communicate within a wireless network, such as a system utilizing 3G or 4G technology. The transceiver 47 can pre-process the signals received from the antenna 43 so that they may be received by and further manipulated by the processor 21. The transceiver 47 also can process signals received from the processor 21 so that they may be transmitted from the display device 40 via the antenna 43. The processor 21 may be configured to receive time data, e.g., from a time server, via the network interface 27.

In some implementations, the transceiver 47 can be replaced by a receiver. In addition, the network interface 27 can be replaced by an image source, which can store or generate image data to be sent to the processor 21. The processor 21 can control the overall operation of the display device 40. The processor 21 receives data, such as compressed image data from the network interface 27 or an image source, and processes the data into raw image data or into a format that is readily processed into raw image data. The processor 21 can send the processed data to the driver controller 29 or to the frame buffer 28 for storage. Raw data typically refers to the information that identifies the image characteristics at each location within an image. For example, such image characteristics can include color, saturation, and gray-scale level.

The processor 21 can include a microcontroller, CPU, or logic unit to control operation of the display device 40. The conditioning hardware 52 may include amplifiers and filters for transmitting signals to the speaker 45, and for receiving signals from the microphone 46. The conditioning hardware 52 may be discrete components within the display device 40, or may be incorporated within the processor 21 or other components.

The driver controller 29 can take the raw image data generated by the processor 21 either directly from the processor 21 or from the frame buffer 28 and can re-format the raw image data appropriately for high speed transmission to the array driver 22. In some implementations, the driver controller 29 can re-format the raw image data into a data flow having a raster-like format, such that it has a time order suitable for scanning across the display array 30. Then the driver controller 29 sends the formatted information to the array driver 22. Although a driver controller 29, such as an LCD controller, is often associated with the system processor 21 as a stand-alone integrated circuit (IC), such controllers may be implemented in many ways. For example, controllers may be embedded in the processor 21 as hardware, embedded in the processor 21 as software, or fully integrated in hardware with the array driver 22.

The array driver 22 can receive the formatted information from the driver controller 29 and can re-format the video data into a parallel set of waveforms that are applied many times per second to the hundreds, and sometimes thousands (or more), of leads coming from the display's x-y matrix of pixels.

In some implementations, the driver controller 29, the array driver 22, and the display array 30 are appropriate for any of the types of displays described herein. For example, the driver controller 29 can be a conventional display controller or a bi-stable display controller (e.g., an IMOD controller). Additionally, the array driver 22 can be a conventional driver or a bi-stable display driver (e.g., an IMOD display driver). Moreover, the display array 30 can be a conventional display array or a bi-stable display array (e.g., a display including an array of IMODs). In some implementations, the driver controller 29 can be integrated with the array driver 22. Such an implementation is common in highly integrated systems such as cellular phones, watches and other small-area displays.

In some implementations, the input device 48 can be configured to allow, e.g., a user to control the operation of the display device 40. The input device 48 can include a keypad, such as a QWERTY keyboard or a telephone keypad, a button, a switch, a rocker, a touch-sensitive screen, or a pressure- or heat-sensitive membrane. The microphone 46 can be configured as an input device for the display device 40. In some implementations, voice commands through the microphone 46 can be used for controlling operations of the display device 40.

The power supply 50 can include a variety of energy storage devices as are well known in the art. For example, the power supply 50 can be a rechargeable battery, such as a nickel-cadmium battery or a lithium-ion battery. The power supply 50 also can be a renewable energy source, a capacitor, or a solar cell, including a plastic solar cell or solar-cell paint. The power supply 50 also can be configured to receive power from a wall outlet.

In some implementations, control programmability resides in the driver controller 29 which can be located in several places in the electronic display system. In some other implementations, control programmability resides in the array driver 22. The above-described optimization may be implemented in any number of hardware and/or software components and in various configurations.

The various illustrative logics, logical blocks, modules, circuits and algorithm processes described in connection with the implementations disclosed herein may be implemented as electronic hardware, computer software, or combinations of both. The interchangeability of hardware and software has been described generally, in terms of functionality, and illustrated in the various illustrative components, blocks, modules, circuits and processes described above. Whether such functionality is implemented in hardware or software depends upon the particular application and design constraints imposed on the overall system.

The hardware and data processing apparatus used to implement the various illustrative logics, logical blocks, modules and circuits described in connection with the aspects disclosed herein may be implemented or performed with a general purpose single- or multi-chip processor, a digital signal processor (DSP), an application specific integrated circuit (ASIC), a field programmable gate array (FPGA) or other programmable logic device, discrete gate or transistor logic, discrete hardware components, or any combination thereof designed to perform the functions described herein. A general purpose processor may be a microprocessor, or, any conventional processor, controller, microcontroller, or state machine. A processor also may be implemented as a combination of computing devices, e.g., a combination of a DSP and a microprocessor, a plurality of microprocessors, one or more microprocessors in conjunction with a DSP core, or any other such configuration. In some implementations, particular processes and methods may be performed by circuitry that is specific to a given function.

In one or more aspects, the functions described may be implemented in hardware, digital electronic circuitry, computer software, firmware, including the structures disclosed in this specification and their structural equivalents thereof, or in any combination thereof. Implementations of the subject matter described in this specification also can be implemented as one or more computer programs, i.e., one or more modules of computer program instructions, encoded on a computer storage media for execution by, or to control the operation of, data processing apparatus.

If implemented in software, the functions may be stored on or transmitted over as one or more instructions or code on a non-transitory computer-readable medium. The processes of a method or algorithm disclosed herein may be implemented in a processor-executable software module which may reside on a computer-readable medium. Computer-readable media includes both computer storage media and communication media including any medium that can be enabled to transfer a computer program from one place to another. Storage media may be any available media that may be accessed by a computer. By way of example, and not limitation, such non-transitory computer-readable media may include RAM, ROM, EEPROM, CD-ROM or other optical disk storage, magnetic disk storage or other magnetic storage devices, or any other medium that may be used to store desired program code in the form of instructions or data structures and that may be accessed by a computer. Also, any connection can be properly termed a computer-readable medium. Disk and disc, as used herein, includes compact disc (CD), laser disc, optical disc, digital versatile disc (DVD), floppy disk, and blu-ray disc where disks usually reproduce data magnetically, while discs reproduce data optically with lasers. Combinations of the above should also be included within the scope of computer-readable media. Additionally, the operations of a method or algorithm may reside as one or any combination or set of codes and instructions on a machine readable medium and computer-readable medium, which may be incorporated into a computer program product.

Various modifications to the implementations described in this disclosure may be readily apparent to those skilled in the art, and the generic principles defined herein may be applied to other implementations without departing from the spirit or scope of this disclosure. Thus, the claims are not intended to be limited to the implementations shown herein, but are to be accorded the widest scope consistent with this disclosure, the principles and the novel features disclosed herein.

Additionally, a person having ordinary skill in the art will readily appreciate, the terms "upper" and "lower" are sometimes used for ease of describing the figures, and indicate relative positions corresponding to the orientation of the figure on a properly oriented page, and may not reflect the proper orientation of the IMOD (or any other device) as implemented.

Certain features that are described in this specification in the context of separate implementations also can be implemented in combination in a single implementation. Conversely, various features that are described in the context of a single implementation also can be implemented in multiple implementations separately or in any suitable subcombination. Moreover, although features may be described above as acting in certain combinations and even initially claimed as such, one or more features from a claimed combination can in some cases be excised from the combination, and the claimed combination may be directed to a subcombination or variation of a subcombination.

Similarly, while operations are depicted in the drawings in a particular order, this should not be understood as requiring that such operations be performed in the particular order shown or in sequential order, or that all illustrated operations be performed, to achieve desirable results. Further, the drawings may schematically depict one more example processes in the form of a flow diagram. However, other operations that are not depicted can be incorporated in the example processes that are schematically illustrated. For example, one or more additional operations can be performed before, after, simultaneously, or between any of the illustrated operations. In certain circumstances, multitasking and parallel processing may be advantageous. Moreover, the separation of various system components in the implementations described above should not be understood as requiring such separation in all implementations, and it should be understood that the described program components and systems can generally be integrated together in a single software product or packaged into multiple software products. Additionally, other implementations are within the scope of the following claims. In some cases, the actions recited in the claims can be performed in a different order and still achieve desirable results.

## Claims

1. A method, comprising:
scanning a sensor array (905);
detecting array capacitances of the sensor array (910);
analyzing the array capacitances (915);
**characterised by**
determining that a pattern of array capacitance values in the array capacitances indicates the presence of an ear (920);
determining whether the pattern of array capacitance values matches previously-acquired ear pattern data; and
invoking a device operation (925) if the pattern of array capacitance values matches the previously-acquired ear pattern data.

2. The method of claim 1, comprising one or more of the following:
i) wherein the sensor array is a projected capacitive touch sensor array;
ii) wherein the invoked device operation unlocks a mobile device;
iii) wherein the device operation is a cell phone operation.

3. The method of claim 2, item iii), comprising one or more of the following:
i) wherein the cell phone operation involves controlling at least one speaker of the cell phone;
ii) wherein the cell phone operation involves controlling voice recognition functionality of the cell phone.

4. The method of claims 1, 2 or 3, further comprising:
receiving a sensor signal from a sensor device; and
determining whether the sensor signal indicates the presence of the ear.

5. A mobile device (40), comprising:
a projected capacitive touch sensor array (1000); and
a logic system configured for:
scanning the sensor array;
detecting array capacitances of the sensor array;
analyzing the array capacitances;
**characterised by** being further configured for:
determining that the array capacitances indicates the presence of an ear;
determining whether the pattern of array capacitance values matches previously-acquired ear pattern data; and
invoking a device operation if the pattern of array capacitance values matches the previously-acquired ear pattern data.

6. The mobile device of claim 5, wherein the mobile device includes a cell phone and wherein the device operation is a cell phone operation.

7. The mobile device of claim 6, comprising one or more of the following:
i) wherein the mobile device includes one or more speakers (45) and wherein the cell phone operation involves controlling at least one speaker of the one or more speakers:
ii) wherein the cell phone operation involves unlocking the cell phone;
iii) wherein the cell phone operation involves controlling voice recognition functionality of the cell phone.

8. The mobile device of claim 7, item i), wherein the cell phone operation involves controlling at least one speaker of the one or more speakers according to an area of an ear touch zone or an amount of force that is being applied to the cell phone.

## Patentansprüche

1. Ein Verfahren, das Folgendes aufweist:
Scannen bzw. Abtasten einer Sensoranordnung bzw. eines Sensorarrays (905);
Detektieren von Array-Kapazitäten der Sensoranordnung (110);
Analysieren der Array-Kapazitäten (915);
**gekennzeichnet durch**
Bestimmen, dass ein Muster von Array-Kapazitätswerten in den Array-Kapazitäten die Anwesenheit eines Ohrs (920) anzeigt;
Bestimmen, ob das Muster von Array-Kapazitätswerten mit zuvor erfassten Ohrmusterdaten zusammenpasst bzw. übereinstimmt; und
Aufrufen bzw. Aktivieren eines Einrichtungsbetriebsvorgangs (925), wenn das Muster der Array-Kapazitätswerte mit den zuvor erfassten Ohrmusterdaten zusammenpasst.

2. Verfahren nach Anspruch 1, das ein oder mehreres von Folgendem aufweist:
i) wobei das Sensor-Array ein projiziertes, kapazitives, berührungsempfindliches Sensor-Array ist;
ii) wobei der aktivierte Einrichtungsbetriebsvorgang eine Mobileinrichtung entriegelt;
iii) wobei der Einrichtungsbetriebsvorgang ein Zellen- bzw. Mobiltelefonvorgang ist.

3. Verfahren nach Anspruch 2, Punkt iii), dass ein oder mehreres von Folgendem aufweist:
i) wobei der Mobiltelefonvorgang Steuern wenigstens eines Lautsprechers des Mobiltelefons aufweist;
ii) wobei der Mobiltelefonvorgang Steuern einer Spracherkennungsfunktionalität des Mobiltelefons aufweist.

4. Verfahren nach Ansprüchen 1, 2 oder 3, das weiter Folgendes aufweist:
Empfangen eines Sendesignals von einer Sensoreinrichtung; und
Bestimmen, ob das Sensorsignal die Anwesenheit des Ohrs anzeigt.

5. Eine Mobileinrichtung (40), die Folgendes aufweist:
ein projiziertes, kapazitives, berührungsempfindliches Sensor-Array (1000);
und
ein Logiksystem, das konfiguriert ist zum:
Scannen bzw. Abtasten des Sensor-Arrays;
Detektieren von Array-Kapazitäten des Sensor-Arrays;
Analysieren der Array-Kapazitäten;
**dadurch gekennzeichnet, dass** sie weiter konfiguriert ist zum:
Bestimmen, dass die Array-Kapazitäten die Anwesenheit eines Ohrs anzeigen;
Bestimmen, ob das Muster von Array-Kapazitätswerten mit zuvor erfassten Ohrmusterdaten übereinstimmt bzw. zusammenpasst; und
Aktivieren eines Einrichtungsbetriebsvorgangs, wenn das Muster von Array-Kapazitätswerten mit den zuvor erfassten Ohrmusterdaten übereinstimmt bzw. zusammenpasst

6. Mobileinrichtung nach Anspruch 5, wobei die Mobileinrichtung ein Zellen- bzw. Mobiltelefon aufweist und wobei der Einrichtungsbetriebsvorgang ein Mobiltelefonvorgang ist.

7. Mobileinrichtung nach Anspruch 6, die ein oder mehreres von Folgendem aufweist:
i) wobei die Mobileinrichtung ein oder mehrere Lautsprecher (45) aufweist und wobei der Mobiltelefonvorgang Steuern wenigstens eines Lautsprechers der ein oder mehrere Lautsprecher aufweist;
ii) wobei der Mobiltelefonvorgang Entriegeln des Mobiltelefons aufweist;
iii) wobei der Mobiltelefonvorgang Steuern einer Spracherkennungsfunktionalität des Mobiltelefons aufweist.

8. Mobileinrichtung nach Anspruch 7, Punkt i), wobei der Mobiltelefonvorgang Steuern wenigstens eines Lautsprechers der ein oder mehreren Lautsprecher gemäß einem Bereich einer Ohrberührungszone oder einem Umfang einer Kraft, die auf das Mobiltelefon aufgebracht wird, aufweist.

## Revendications

1. Un procédé, comprenant :
le balayage d'une matrice de capteurs (905),
la détection de capacités de matrice de la matrice de capteurs (910),
l'analyse des capacités de matrice (915),
**caractérisé par**
la détermination qu'un modèle de valeurs de capacité de matrice dans les capacités de matrice indique la présence d'une oreille (920),
la détermination si le modèle de valeurs de capacité de matrice correspond à des données de modèle d'oreille acquises antérieurement, et
l'invocation d'une opération de dispositif (925) si le modèle de valeurs de capacité de matrice correspond aux données de modèle d'oreille acquises antérieurement.

2. Le procédé selon la Revendication 1, comprenant un ou plusieurs des éléments suivants :
i) la matrice de capteurs est une matrice de capteurs tactiles capacitifs projetée,
ii) l'opération de dispositif invoqué déverrouille un dispositif mobile,
iii) l'opération de dispositif est une opération de téléphone cellulaire.

3. Le procédé selon la Revendication 2, point iii), comprenant un ou plusieurs des éléments suivants :
i) l'opération de téléphone cellulaire implique la commande d'au moins un haut-parleur du téléphone cellulaire,
ii) l'opération de téléphone cellulaire implique la commande d'une fonctionnalité de reconnaissance vocale du téléphone cellulaire.

4. Le procédé selon les Revendications 1, 2 ou 3, comprenant en outre :
la réception d'un signal de capteur à partir d'un dispositif capteur, et
la détermination si le signal de capteur indique la présence de l'oreille.

5. Un dispositif mobile (40), comprenant :
une matrice de capteurs tactiles capacitifs projetée (1000), et
un système logique configuré de façon à :
balayer la matrice de capteurs,
détecter des capacités de matrice de la matrice de capteurs,
analyser les capacités de matrice,
**caractérisé en ce qu'**il est configuré en outre de façon à :
déterminer que les capacités de matrice indiquent la présence d'une oreille,
déterminer si le modèle de valeurs de capacité de matrice correspond à des données de modèle d'oreille acquises antérieurement, et
invoquer une opération de dispositif si le modèle de valeurs de capacité de matrice correspond aux données de modèle d'oreille acquises antérieurement.

6. Le dispositif mobile selon la Revendication 5, où le dispositif mobile comprend un téléphone cellulaire et où l'opération de dispositif est une opération de téléphone cellulaire.

7. Le dispositif mobile selon la Revendication 6, comprenant un ou plusieurs des éléments suivants :
i) le dispositif mobile comprend un ou plusieurs haut-parleurs (45) et l'opération de téléphone cellulaire implique la commande d'au moins un haut-parleur des un ou plusieurs haut-parleurs :
ii) l'opération de téléphone cellulaire implique le déverrouillage du téléphone cellulaire,
iii) l'opération de téléphone cellulaire implique la commande d'une fonctionnalité de reconnaissance vocale du téléphone cellulaire.

8. Le dispositif mobile selon la Revendication 7, point i), où l'opération de téléphone cellulaire implique la commande d'au moins un haut-parleur des un ou plusieurs haut-parleurs en fonction d'une partie d'une zone de contact de l'oreille ou d'une quantité de force qui est appliquée au téléphone cellulaire.
